# EUROPEAN PATENT SPECIFICATION

(11) **EP 2 949 962 B1**
(45) Date of publication and mention of the grant of the patent: **06.06.2018**
(21) Application number: 14198347.8
(22) Date of filing: 16.12.2014
(51) Int. Cl.: F16F 9/00, B62K 21/08, B60G 13/00, F02M 35/16, F02B 27/00, F02B 27/02, F02M 35/10, B62J 29/00, B60K 13/02

(54) **Motor vehicle**
Kraftfahrzeug
Véhicule à moteur

(30) Priority: 30.05.2014 JP 2014112937
(43) Date of publication of application: 02.12.2015
(73) Proprietor: Yamaha Hatsudoki Kabushiki Kaisha, Iwata-shi, Shizuoka-ken 438-8501 (JP)
(72) Inventor: Tachibana, Masumi, Shizuoka-ken, 438-8501 (JP)
(74) Representative: Moreland, David

(56) References cited:
- EP-A1- 1 707 483
- EP-A2- 1 464 825
- JP-A- 2010 059 923
- JP-A- 2010 095 244
- JP-A- 2012 001 035
- US-A1- 2007 149 105

## Description

### FIELD OF INVENTION

The present invention relates to a saddled vehicle, saddle-ride vehicle or straddle-type vehicle, such as a saddle-straddling type motor vehicle that can achieve a supercharging effect by ram pressure.

### BACKGROUND TO INVENTION

In a saddle-ride or straddle-type vehicle, e.g. a motorcycle, a steering damper is used in order to inhibit or prevent vibrations generated between a vehicle main body and a steering system member during travel. The vehicle main body is constituted by or comprises a body frame that includes a head pipe, and the like. The steering system member is constituted by or comprises a handle, a front fork and the like. The front fork is constituted by or comprises an upper bracket, an under bracket and left and right fork tubes. Upper portions of the left and right fork tubes are coupled to each other by the upper bracket. Further, the left and right fork tubes are coupled to each other by the under bracket at a position further downward than the upper bracket.

For example, when the steering damper is provided at the upper bracket, attachment of the steering damper may be facilitated.

The fluctuation of rotation or vibrations generated between the vehicle main body and the steering system member during travel, can be due to, for example, external force exerted from the road surface on a front wheel. The steering damper attenuates the vibrations generated by the external force exerted from the road surface on the front wheel. Therefore, the further an attachment position of the steering damper in the steering system member is spaced apart from the front wheel, the more likely it is that torsion is generated at the front fork. Therefore, it is desirable that the steering damper is attached to a position close to the front wheel. In this case, generation of torsion at the front fork can be inhibited or prevented.

JP 2010-59923 A (YAMAHA MOTOR CO LTD), describes a motorcycle with a steering damper provided at an under bracket. Thus, the steering damper is arranged at a position closer to a front wheel than an upper bracket.

A duct used when outside air is led to an air cleaner, is sometimes provided in order to achieve a supercharging effect by leading the air flowing from the front to an engine through the air cleaner during travel. In the motorcycle described in the above-mentioned JP 2010-59923 A, a pair of air guide ducts is provided in front of a head pipe to extend to the outside on both sides of a front fork. Therefore, the width of a front end of a vehicle is increased. It is desirable that the width of the front end of the vehicle is small in order to improve aerodynamic characteristics.

In contrast, in a saddle-ride or straddle-type vehicle, such as a motorcycle as described in JP 2010-95244 A (KAWASAKI HEAVY IND LTD), a ram duct is provided between an upper bracket and an under bracket to pass forward between left and right fork tubes. Thus, the width of a front end of a vehicle is not increased. In the saddle-ride or straddle type vehicle, e.g. the motorcycle described in JP 2010-95244 A, a steering damper is not provided.

When the steering damper is provided in the motorcycle described in JP 2010-95244 A, vibrations generated between a vehicle main body and a steering system member during travel can be inhibited or prevented. However, since the ram duct is provided between the left and right fork tubes, the steering damper cannot be provided at the under bracket as described in JP 2010-59923 A. An object of the present invention is to provide a saddle-ride or straddle-type vehicle, such as a saddle-straddling type motor vehicle, in which generation of torsion at a front fork can be inhibited or prevented and vibrations generated at a steering system can be attenuated, and a supercharging effect can be achieved without an increase in width of a vehicle front end.

EP 1 707 483 (HONDA MOTOR CO LTD) teaches of motorcycle in which a steering damper is arranged between left and right main frames of a vehicle body frame that extend obliquely in the rearward and downward directions from the head pipe and positioned above an intake duct, which penetrates in the vicinity of the head pipe. The steering damper may alternatively be positioned below the intake duct. The intake duct opens at a front end portion of a front cowl so that travelling air can be introduced into an air cleaner box.

JP 2010-059923 (YAMAHA MOTOR CO LTD) describes a motorcycle that does not have a steering damper.

An object of at least one embodiment or of at least one aspect of the present invention is to obviate or at least mitigate one or more problems or disadvantages in the prior art.

### SUMMARY OF INVENTION

Various aspects of the present invention are defined in the appended independent claim. Some optional features are defined in the appended dependent claims.

### BRIEF DESCRIPTION OF DRAWINGS

An embodiment of the present invention will now be described, by way of example only, and with reference to the accompanying drawings, which are:
- Figure 1: a side view of one side of a motorcycle according to one embodiment of the present invention;
- Figure 2: a front view of the motorcycle of Figure 1 as viewed from the front;
- Figure 3: a perspective view showing assembly steps of a front portion of the motorcycle of Figure 1;
- Figure 4: a perspective view showing the assembly steps of the front portion of the motorcycle of Figure 1;
- Figure 5: a perspective view showing the assembly steps of the front portion of the motorcycle of Figure 1;
- Figure 6: a perspective view showing the assembly steps of the front portion of the motorcycle of Figure 1;
- Figure 7: a perspective view showing the assembly steps of the front portion of the motorcycle of Figure 1;
- Figure 8: an exploded perspective view of a duct main body of Figure 3;
- Figure 9: an external perspective view showing the duct main body of Figure 8 being attached to an intake guide of Figure 3;
- Figure 10: a plan view showing a plurality of devices, which are used when a flap is driven, being attached to the duct main body;
- Figure 11: a side view of one side of the duct main body of Figure 10 as viewed from a position further leftward than a vehicle;
- Figure 12: a side view of the other side of the duct main body of Figure 10 as viewed from a position further rightward than the vehicle;
- Figure 13: an external perspective view of a stay of Figure 3 as obliquely viewed rearward from above;
- Figure 14: a partial external perspective view of the stay of Figure 3 as obliquely viewed forward from below;
- Figure 15: an external perspective view of a plurality of devices and members being attached to the duct main body;
- Figure 16: a side view of one side of the duct main body of Figure 15 as viewed from a position further leftward than the vehicle;
- Figure 17: a side view of the other side of the duct main body of Figure 15 as viewed from a position further rightward than the vehicle;
- Figure 18: a longitudinal cross sectional view of a front portion of the motorcycle taken along the line Q-Q of Figure 2;
- Figure 19A: a diagram showing a simulation of a relationship between a flap, having a wavy shape, and a loss of air flow;
- Figure 19B: a diagram showing a simulation of a relationship between a flap, having a flat-plate shape, and a loss of air flow;
- Figure 20: a graph showing a simulation result of the relationship between the shape of the flap and the loss of air flow;
- Figure 21: a side view of one side of a steering damper as viewed from a position further leftward than the vehicle; and
- Figure 22: a bottom view of the steering damper of Figure 21 as viewed from below.

### DETAILED DESCRIPTION OF DRAWINGS

A saddled vehicle, saddle-ride vehicle or straddle-type vehicle, such as a saddle-straddling type motor vehicle according to one embodiment of the present invention will be described below with reference to drawings. In the following description, a motorcycle will be described as one example of the saddle vehicle.

### Schematic Configuration of Motorcycle

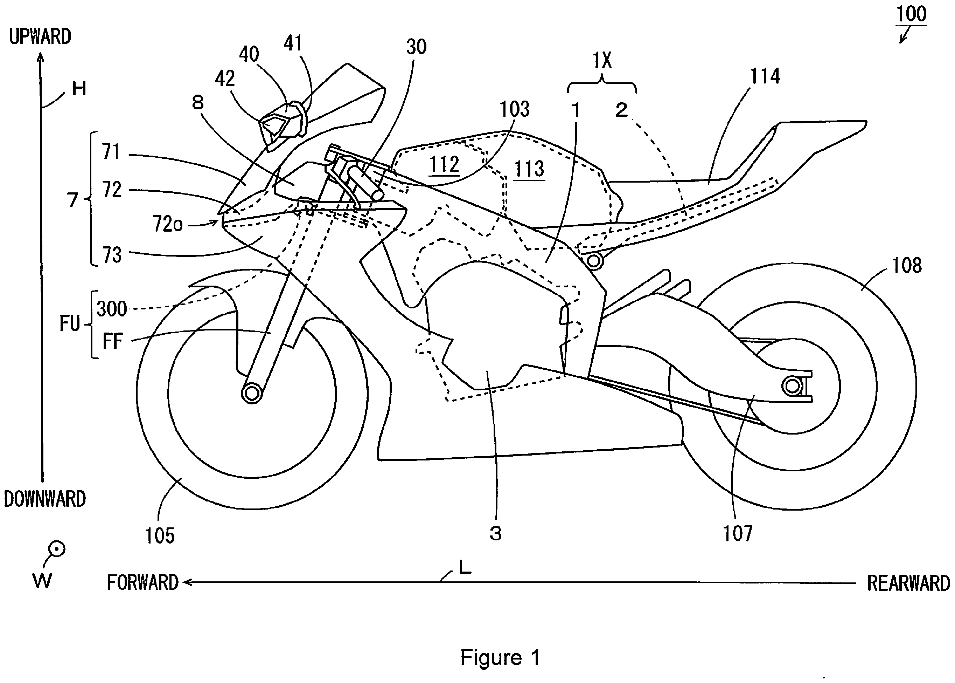

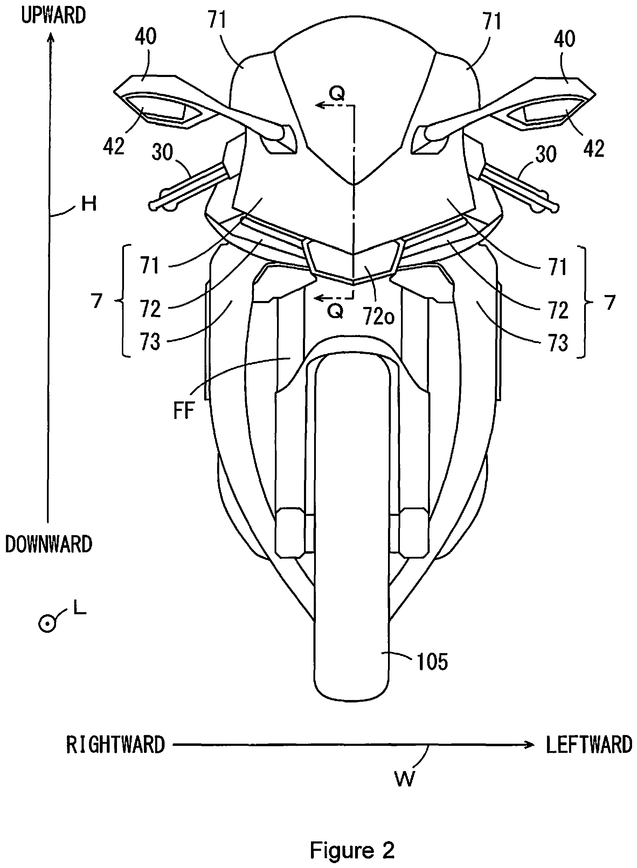

Figure 1 is a side view of one side of the motorcycle 100 according to one embodiment of the present invention, and Figure 2 is a front view of the motorcycle 100 of Figure 1 as viewed from the front. In Figures 1 and 2, the motorcycle 100 is shown standing up to be perpendicular to the road surface. In Figures 1, 2, and each of subsequent diagrams, a front-and-rear direction L, a width direction W and a top-and-bottom direction H of the motorcycle 100 are indicated by arrows. In the following description, a direction in which the arrow is directed in the front-and-rear direction L is referred to as forward, and its opposite direction is referred to as rearward. Further, a direction in which the arrow is directed in the width direction W is referred to as leftward, and its opposite direction is referred to as rightward. Further, a direction in which the arrow is directed in the top-and-bottom direction H is referred to as upward, and its opposite direction is referred to as downward.

As shown in Figure 1, the motorcycle 100 includes a head pipe 103 and a body frame 1X. The body frame 1X includes a pair of main frames 1, namely left and right main frames 1, and a pair of sub-frames 2, namely left and right sub-frames 2. The left and right main frames 1 obliquely extend downward and rearward from the head pipe 103. The rear ends of the left and right main frames 1 are curved downward. The left and right sub-frames 2 extends rearward from upper portions at the rear ends of the respective left and right main frames 1.

A duct unit 8 is provided in front of the head pipe 103. A front fork FF is provided at the head pipe 103 to be swingable or rotatable rightward and leftward. A pair of handles 30, namely left and right handles 30, is provided at the upper end of the front fork FF. A front wheel 105 is rotatably supported at the lower end of the front fork FF. A steering damper 300 is provided at the front fork FF. In the present embodiment, a front fork unit FU is constituted by or includes the front fork FF and the steering damper 300. The steering damper 300 is arranged below the duct unit 8. Details of the steering damper 300 will be described below.

An engine 3 is provided at a lower portion of the left and right main frames 1. The engine 3 is supported by the left and right main frames 1. An air cleaner 112 is supported by the left and right main frames 1 at a position above the engine 3. A discharge port of the air cleaner 112 is connected to an intake port of the engine 3 through an intake pipe and a throttle body (not shown).

A fuel tank 113 is supported by the left and right main frames 1 behind the air cleaner 112. Further, a seat 114 is supported by the left and right sub-frames 2 behind the fuel tank 113. A rear arm 107 is provided to extend rearward from the lower ends of the left and right main frames 1. A rear wheel 108 is rotatably supported at the rear end of the rear arm 107.

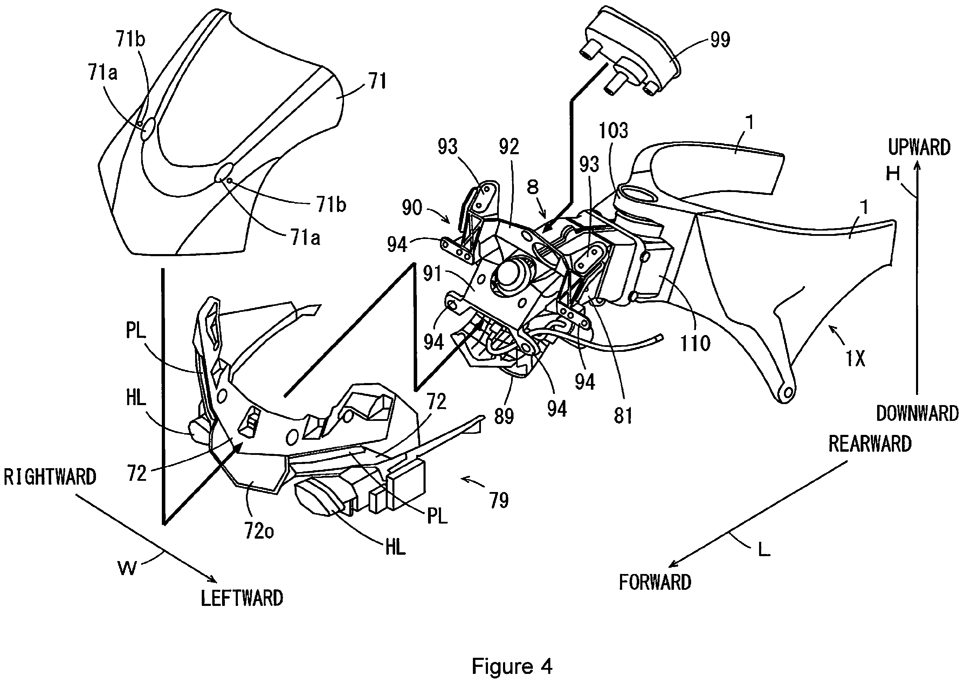

As shown in Figures 1 and 2, a body cover 7 is provided to cover the head pipe 103 from the front and part of the front fork FF from both sides. The body cover 7 includes a front cowl 71, an upper cowl 72, a pair of side cowls 73, and a head lamp cover 74 that is described below (see, e.g. Figure 4).

As shown in Figure 1, the front cowl 71 obliquely extends upward and rearward from a position in front of the head pipe 103. The upper cowl 72 is located below the front cowl 71, and supports the lower end of the front cowl 71. The pair of side cowls 73 is located below the upper cowl 72 and at positions further outward than the front fork FF.

An intake opening 72o is formed at the upper cowl 72. As shown in Figure 2, when the motorcycle 100 is viewed from the front, the intake opening 72o is located at the center in the width direction W of the motorcycle 100.

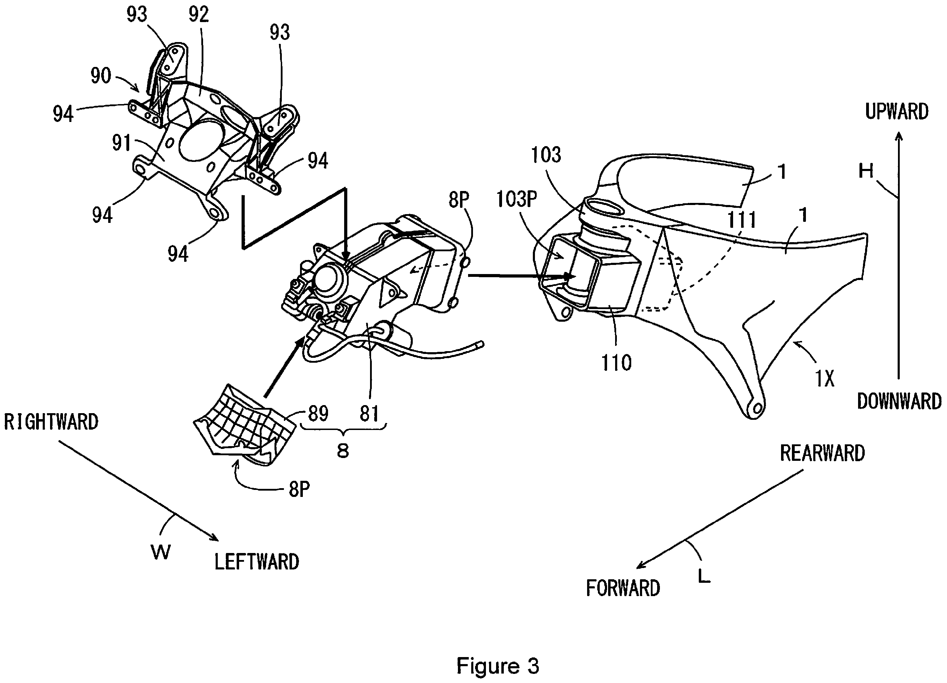

A tip end of the duct unit 8 shown in Figure 1 is connected to the intake opening 72o of the upper cowl 72 from behind. During travel of the motorcycle 100, the air flowing into the duct unit 8 through the intake opening 72o is led to the engine 3 through an intake passage 103P that is described below (see, e.g. Figure 3), the air cleaner 112, the intake pipe and the throttle body (not shown).

As shown in Figures 1 and 2, a pair of mirror devices 40, namely right and left mirror devices 40, is provided at the front cowl 71 at positions substantially the same height as the upper end of the front fork FF. Each mirror device 40 of the pair of mirror devices 40 includes a mirror 41 directed rearward of the vehicle, and an indicator or flasher 42 directed forward of the vehicle.

A rider of the motorcycle 100 can view the area behind the motorcycle 100 by looking at each mirror 41 while driving. Further, the rider can switch between an unlit or non-operating state and a blinking or operating state of each indicator or flasher 42 by operating a handle switch provided at each of the pair of handles 30.

### Configuration of Front Portion of Motorcycle

Figures 3 to 7 are perspective views showing the assembly steps of the front portion of the motorcycle 100 of Figure 1. The attachment step of the front fork FF to the head pipe 103 will not be described below.

As shown in Figure 3, a square-tube intake guide 110 is attached to the front of the head pipe 103. The intake guide 110 is provided to open forward and rearward. Further, an intake guide 111 is attached to the back of the head pipe 103 to be connected to the intake guide 110. The intake passage 103P, which leads air rearward from the front of the head pipe 103, is formed by the intake guides 110, 111.

The duct unit 8 is connected to the intake guide 110, and an intake port of the air cleaner 112 shown in Figure 1 is connected to the intake guide 111. Thus, air flowing into the duct unit 8 is smoothly led to the air cleaner 112 through the intake passage 103P.

As shown in Figure 3, the duct unit 8 includes a duct main body 81 and a duct tip end 89. The duct main body 81 is a tubular member having a rectangular cross section, which obliquely extends upward and forward, and further obliquely extends downward and forward. The duct tip end 89 is attached to the front end of the duct main body 81. A metal mesh may be provided at a front end opening of the duct main body 81. In this case, the metal mesh prevents foreign matter or particles from entering the inside of the duct main body 81.

The duct tip end 89 is a tubular member having a rectangular cross section, and obliquely extends downward and forward. The length in the front-and-rear direction L of the duct tip end 89 is shorter than the length in the front-and-rear direction L of the duct main body 81. For example, the duct main body 81 can be formed of a glass fiber-reinforced resin, and the duct tip end 89 can be formed of rubber.

An inner space of the duct main body 81 and an respective inner space of the duct tip end 89 function as intake passages 8P, which are used when air is led to the engine 3.

As described above, the rear end of the duct main body 81 is connected to the intake guide 110. A stay 90 is attached to the duct main body 81. The stay 90 supports the pair of mirror devices 40, and a meter unit 99 that is described below (see, e.g. Figure 4). In this manner, the duct unit 8 and the stay 90 are integrally fixed to the body frame 1X.

For example, the stay 90 can be formed of a glass fiber-reinforced resin. The stay 90 has a duct attachment portion 91, an upstanding portion 92, a pair of mirror device fixing portions 93, namely left and right mirror device fixing portions 93, and a plurality of (four in the present example) lamp fixing portions 94.

The duct attachment portion 91 is attached to the upper surface of the duct main body 81. The upstanding portion 92 projects upward from the rear end of the duct attachment portion 91. The left and right mirror device fixing portions 93 are located at the respective left and right side of the upstanding portion 92. Details of the stay 90 will be described below.

Two lamp fixing portions 94 are located at the respective left and right of the front end of the duct attachment portion 91. The other two lamp fixing portions 94 are located below the respective left and right mirror device fixing portions 93.

As shown in Figure 4, a lamp unit 79 is attached to the plurality of lamp fixing portions 94 of the stay 90. The lamp unit 79 includes the upper cowl 72, a pair of position lamps PL and a pair of head lamps HL.

The lower end of the front cowl 71 shown in Figure 1 is attached to the front end of the upper cowl 72. A pair of mirror fixing holes 71a, namely left and right mirror fixing holes 71a, and a pair of wiring holes 71b, namely left and right wiring holes 71b, are formed in the front cowl 71. The front cowl 71 is attached to the upper cowl 72, so that the left and right mirror fixing holes 71a overlap with the respective left and right mirror device fixing portions 93 of the stay 90. Thus, the pair of mirror device fixing portions 93 is exposed on the upper surface of the front cowl 71.

The meter unit 99 is attached to the upstanding portion 92 of the stay 90 from behind. The meter unit 99 has a configuration in which a speed meter and a tachometer, for example, are stored in a casing.

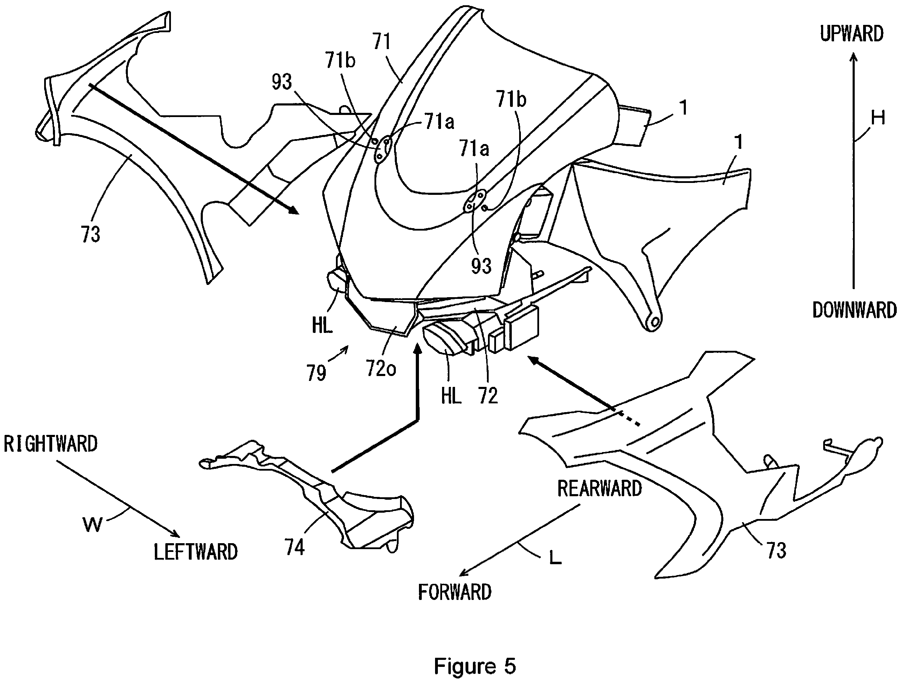

As shown in Figure 5, the side cowls 73 are attached to a respective right side portion and left side portion of the upper cowl 72. Further, the head lamp cover 74 is attached to each lower portion of the pair of head lamps HL to cover part of the lamp unit 79 from below.

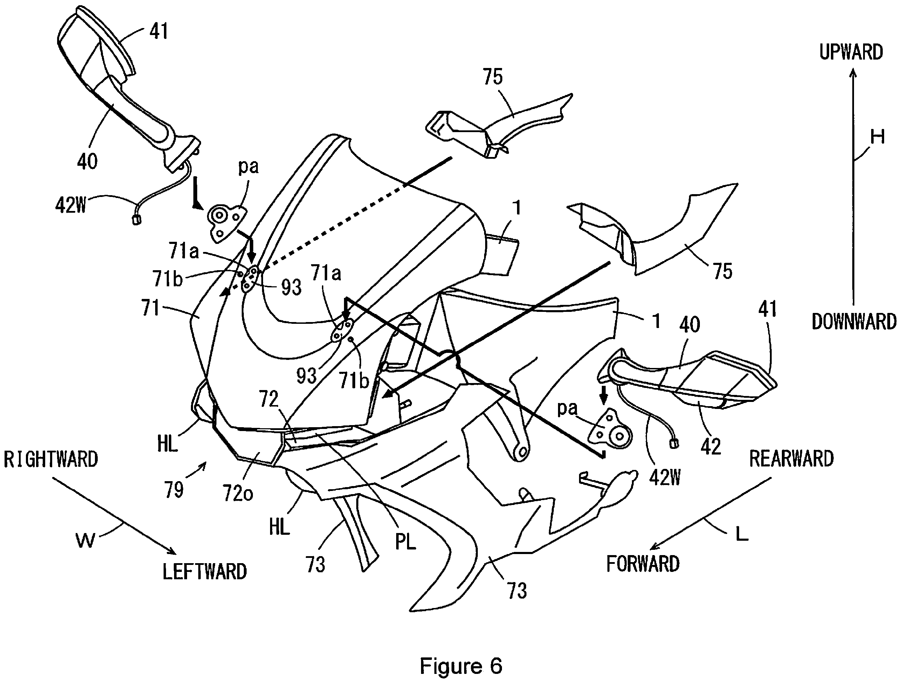

As shown in Figure 6, the left and right mirror devices 40 are attached to the respective left and right mirror device fixing portions 93, which are exposed through the mirror fixing holes 71a of the front cowls 71 with packing members pa made of rubber being sandwiched therebetween. At this time, wiring 42W, which extends from the lower end of each mirror device 40 of the indicator or flasher 42, is put through each wiring hole 71b of the front cowl 71.

Further, in the present example, a pair of inner covers 75 is attached to left and right outer side portions in the width direction W of the upper cowl 72 to cover at least part of the pair of position lamps PL from behind.

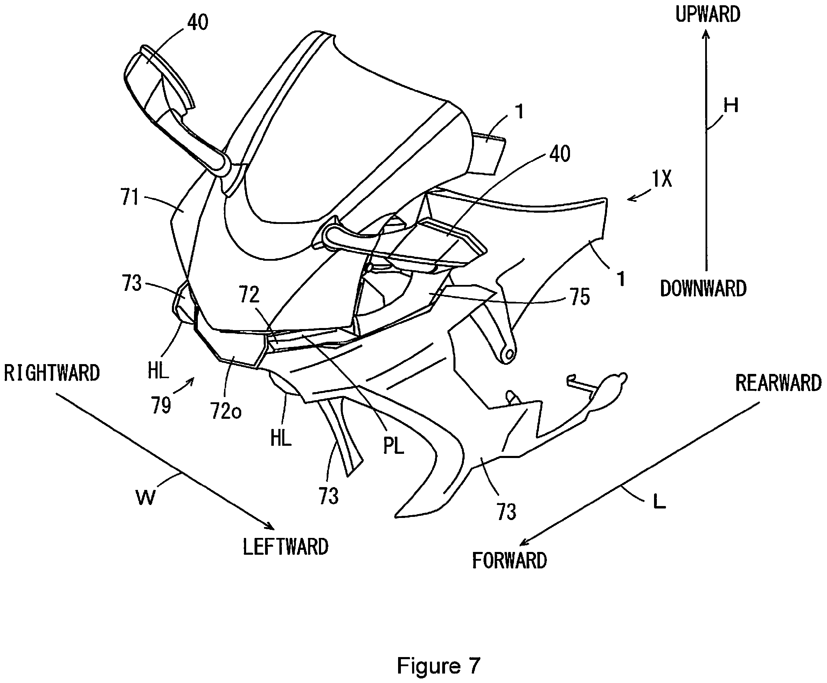

The front portion of the motorcycle 100 is assembled as described above. Thus, as shown in Figure 7, each of constituent elements, which constitutes or is included in the front portion of the motorcycle 100, is fixed to the body frame 1X.

### Duct Main Body

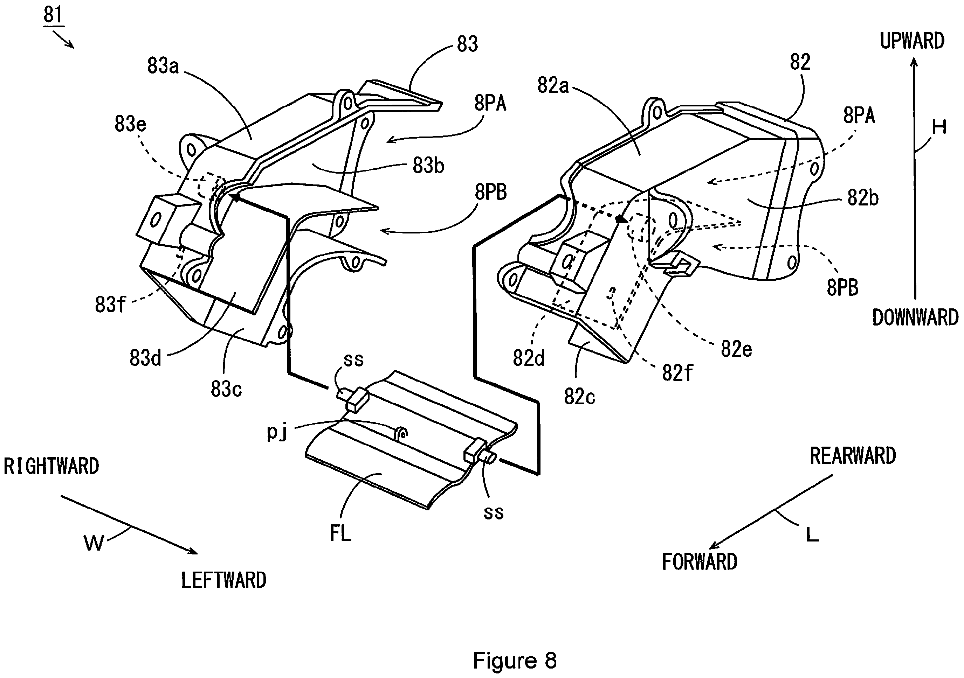

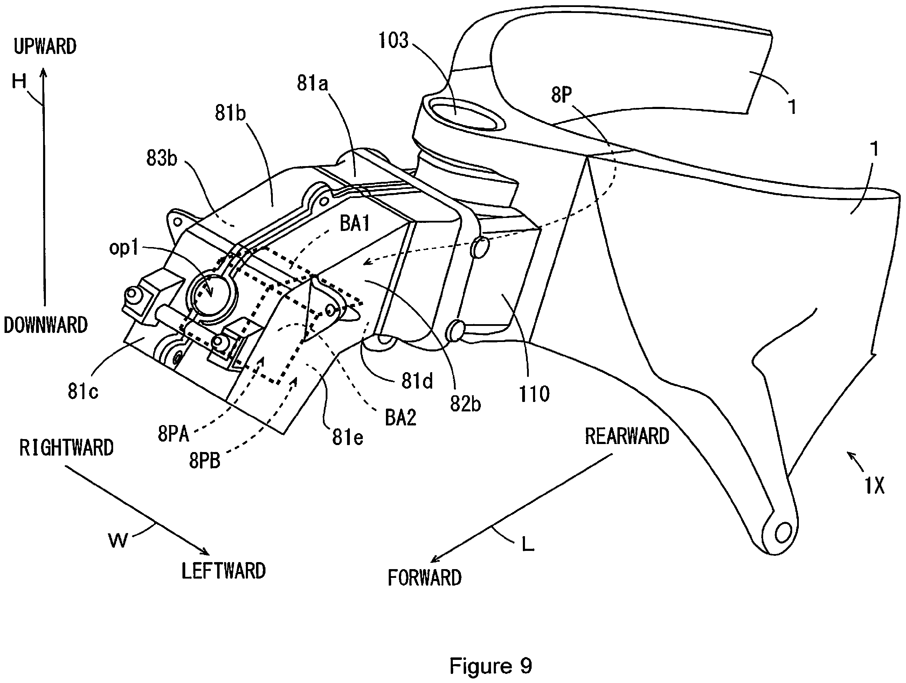

Figure 8 is an exploded perspective view of the duct main body 81 shown in Figure 3, and Figure 9 is an external perspective view showing the duct main body 81 shown in Figure 8 being attached to the intake guide 110 shown in Figure 3. As shown in Figure 8, the duct main body 81 of the present example can be formed by coupling a pair of passage forming members 82, 83, namely left and right passage forming members 82, 83, to each other.

The left passage forming member 82 has an upper surface portion 82a, a side surface portion 82b, a bottom surface portion 82c, a partition wall 82d, a flap supporter 82e and a rotation blocker 82f. The partition wall 82d is located between the upper surface portion 82a and the bottom surface portion 82c. The flap supporter 82e and the rotation blocker 82f are formed on portions inside of the side surface portion 82b between the upper surface portion 82a and the partition wall 82d. The rotation blocker 82f is located at a position further forward than the flap supporter 82e.

The right passage forming member 83 has an upper surface portion 83a, a side surface portion 83b, a bottom surface portion 83c, a partition wall 83d, a flap supporter 83e and a rotation blocker 83f. The partition wall 83d is located between the upper surface portion 83a and the bottom surface portion 83c. The flap supporter 83e and the rotation blocker 83f are formed on portions inside of the side surface portion 83b between the upper surface portion 83a and the partition wall 83d. The rotation blocker 83f is located at a position further forward than the flap supporter 83e.

The upper surface portions 82a, 83a shown in Figure 8 are coupled to each other such that a rear upper surface portion 81a, a central upper surface portion 81b and a front upper surface portion 81c, which are arranged in the front-and-rear direction L, are formed, as shown in Figure 9. Further, a circular opening op1 is formed at the front upper surface portion 81c. With the duct main body 81 being attached to the intake guide 110, the rear upper surface portion 81a obliquely extends upward and forward from the head pipe 103. Further, the central upper surface portion 81b substantially horizontally extends forward from the front end of the rear upper surface portion 81a. Further, the front upper surface portion 81c obliquely extends downward and forward from the front end of the central upper surface portion 81b.

The bottom surface portions 82c, 83c shown in Figure 8 are coupled to each other such that a rear bottom surface portion 81d and a front bottom surface portion 81e, which are arranged in the front-and-rear direction L, are formed, as shown in Figure 9. With the duct main body 81 being attached to the intake guide 110, the rear bottom surface portion 81d obliquely extends upward and forward from the head pipe 103. Further, the front bottom surface portion 81e obliquely extends downward and forward from the front end of the rear bottom surface portion 81d.

The partition walls 82d, 83d shown in Figure 8 are coupled to each other such that a rear partition wall BA1 and a front partition wall BA2, which are arranged in the front-and-rear direction L, are formed, as shown in Figure 9. With the duct main body 81 being attached to the head pipe 103, the rear partition wall BA1 obliquely extends upward and forward. Further, the front partition wall BA2 obliquely extends downward and forward from the front end of the rear partition wall BA1. Inside of the duct main body 81, part of the intake passage 8P is partitioned or separated into two intake passages, which are arranged in the top-and-bottom direction by the rear partition wall BA1 and the front partition wall BA2. In the following description, an upper intake passage partitioned by the rear partition wall BA1 and the front partition wall BA2 is referred to as an upper passage 8PA, and a lower intake passage is referred to as a lower passage 8PB.

As shown in Figure 8, in the present example a flap FL is provided inside of the duct main body 81. Rotation shafts ss, which project in the width direction W, are formed at the center on the respective right side and the center on the respective left side of the flap FL. Further, a driving projection pj is formed on the central portion of the flap FL at a position further forward than the rotation shafts ss.

As indicated by the thick arrow in Figure 8, at the time of coupling the pair of passage forming members 82, 83 to each other, one rotation shaft ss of the flap FL is rotatably or pivotably attached to the flap supporter 82e of the passage forming member 82. Further, the other rotation shaft ss of the flap FL is rotatably or pivotably attached to the flap supporter 83e of the passage forming member 83.

Thus, the flap FL is rotatably or pivotably supported about an axis parallel to the width direction W in the upper passage 8PA of the duct main body 81. The upper passage 8PA is opened by the rotation of the flap FL in one or a first direction, and the upper passage 8PA is closed by the rotation of the flap FL in an opposite or a second direction.

The rotation blockers 82f, 83f block rotation of the flap FL in the one or first direction by not less than a constant angle when the upper passage 8PA is opened. Thus, an open state of the upper passage 8PA is maintained as described below.

### Driving Device of Flap Provided at Duct Main Body

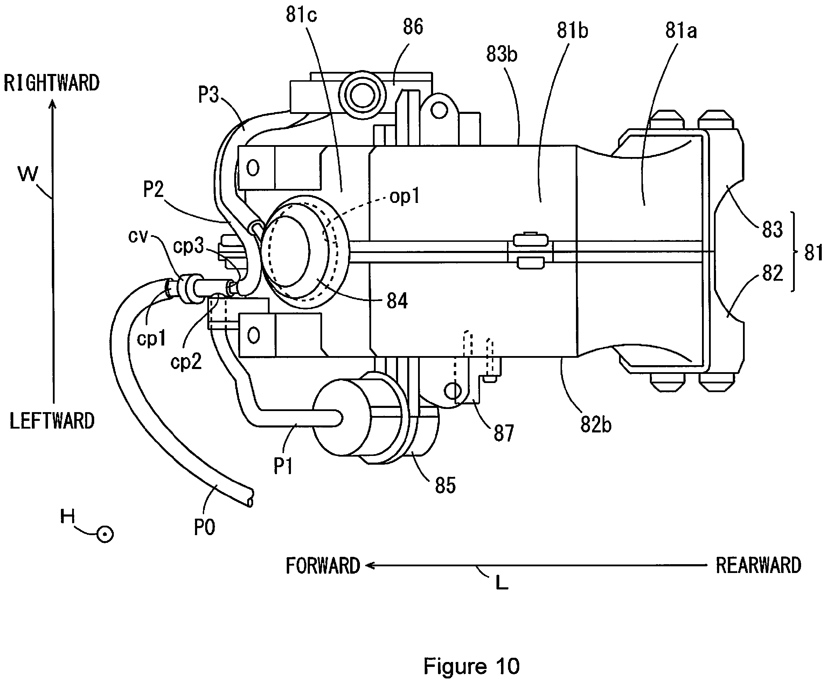

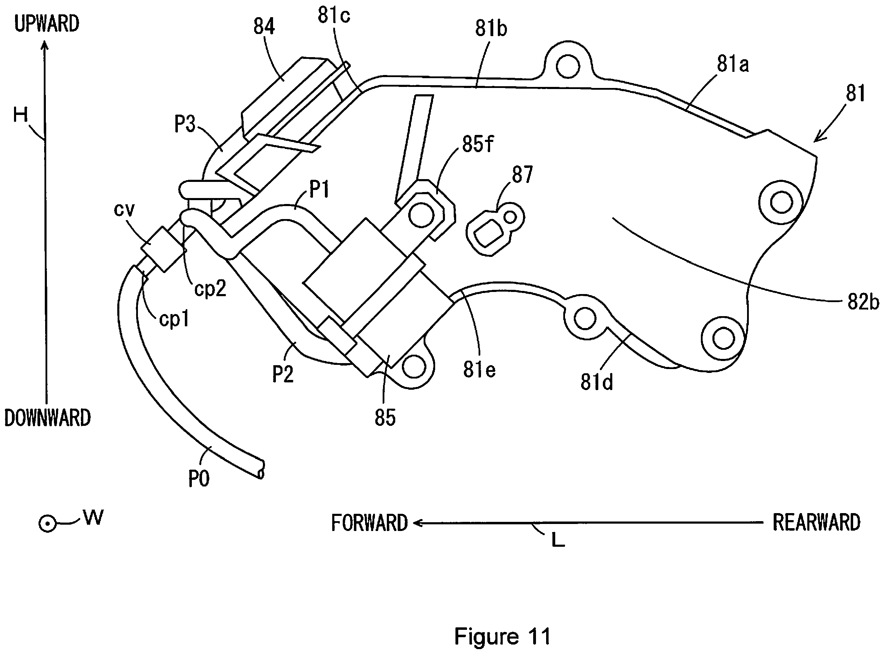

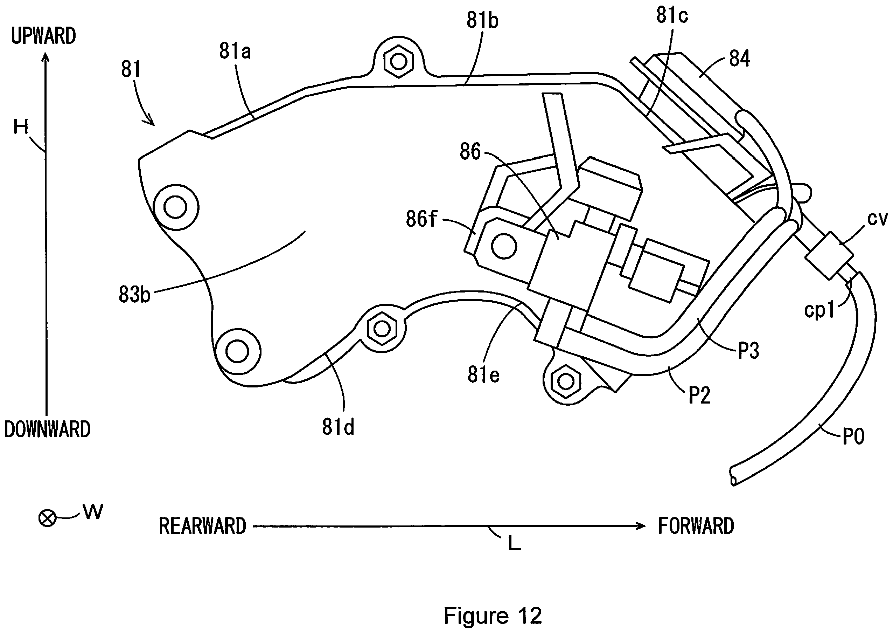

A plurality of devices, which are used when the flap FL is driven, are attached to the duct main body 81. Figure 10 is a plan view showing the plurality of devices attached to the duct main body 81, which are used when the flap FL is driven. Figure 11 is a side view of one side of the duct main body 81 shown in Figure 10 as viewed from a position further leftward than the vehicle, and Figure 12 is a side view of the other side of the duct main body 81 shown in Figure 10 as viewed from a position further rightward than the vehicle.

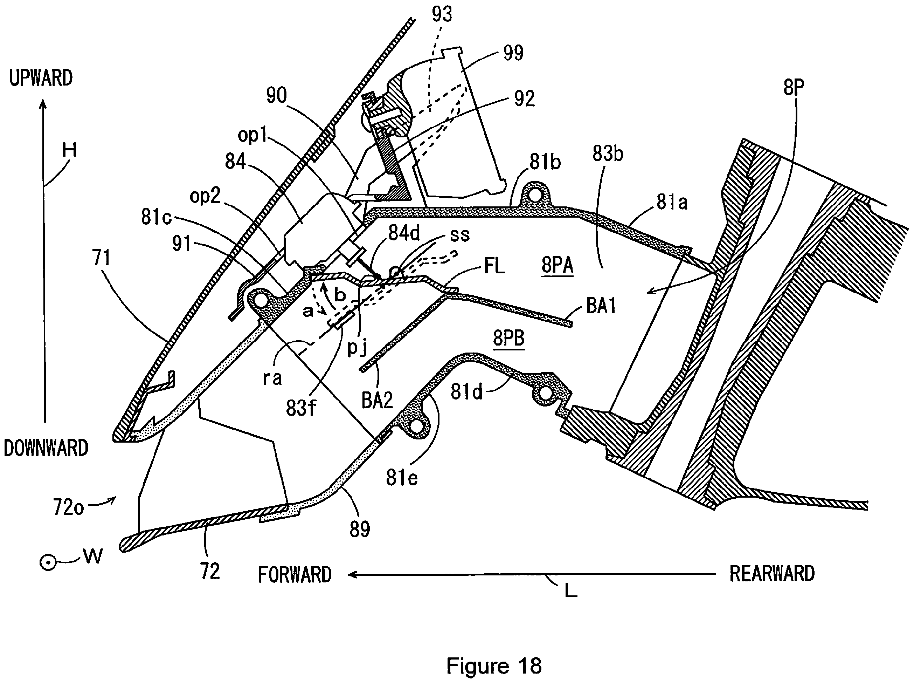

As shown in Figure 10, a flap open/close device 84 is provided on the front upper surface portion 81c of the duct main body 81 to cover the opening op1. Part of the flap open/close device 84 is sandwiched between the upper surface portion 82a of the passage forming member 82 (see, e.g. Figure 8) and the upper surface portion 83a of the passage forming member 83 (see, e.g. Figure 8). The flap open/close device 84 is a substantially columnar actuator. For example, the flap open/close device 84 can include a suction chamber, a diaphragm, and a coupling member 84d, which are described below (see, e.g. Figure 18).

In the flap open/close device 84, the diaphragm is deformed due to a change in pressure in the suction chamber, and the coupling member 84d (see, e.g. Figure 18) operates corresponding to the deformation of the diaphragm. Thus, the flap FL shown in Figure 8 is rotated, so that the upper passage 8PA of Figure 9 is opened or closed.

As shown in Figure 11, a surge tank 85, which accumulates intake pressure of the engine 3 shown in Figure 1, is provided at the side surface portion 82b of the duct main body 81 directed leftward. A fixing portion 85f is formed on the side surface portion 82b. The surge tank 85 is fixed or attached to the fixing portion 85f of the side surface portion 82b by a screw or other fixing means.

As shown in Figure 12, a solenoid valve 86 is provided at the side surface portion 83b of the duct main body 81 directed rightward. Details of the solenoid valve 86 will be described below. A fixing portion 86f is formed on the side surface portion 83b. The solenoid valve 86 is fixed or attached to the fixing portion 86f of the side surface portion 83b by a screw or other fixing means.

As shown in Figure 10, a check valve cv is provided at the front end of the front upper surface portion 81c of the duct main body 81. The check valve cv has an outflow port cp1 and two inflow ports cp2, cp3. The two inflow ports cp2, cp3 communicate with each other.

A pipe P0 is provided to connect the outflow port cp1 to the intake passage of the engine 3. A pipe P1 is provided to connect the inflow port cp2 to the surge tank 85. A pipe P2 is provided to connect the inflow port cp3 to the solenoid valve 86. A pipe P3 is provided to connect the solenoid valve 86 to the flap open/close device 84.

In the above-mentioned configuration, when the intake pressure of the engine 3 (the pressure in the intake passage) first becomes lower than atmospheric pressure, the air in the surge tank 85 is sucked into the intake passage of the engine 3. Thus, the pressure in the surge tank 85 becomes or has a negative pressure.

Thereafter, when the pressure in the intake passage of the engine 3 becomes higher than the pressure in the surge tank 85, the air in the intake passage is prevented from flowing out to the inside of the surge tank 85 by the check valve cv. Thus, the pressure in the surge tank 85 is maintained at the negative pressure. In this manner, the intake pressure of the engine 3 is accumulated in the surge tank 85.

The solenoid valve 86 of the present example is a three-way valve that is controlled by an Electronic Control Unit (ECU) (not shown) of the motorcycle 100. Based on the control of the ECU, the solenoid valve 86 lets or allows an inner space of the pipe P2 and an inner space of the pipe P3 to communicate with each other. In this case, the intake pressure accumulated by the surge tank 85 is led to the flap open/close device 84 through the pipes P1, P2, P3. Thus, the inside of the suction chamber of the flap open/close device 84 becomes or has a negative pressure.

Further, based on the control of the ECU, the solenoid valve 86 opens the inner space of the pipe P3 to the atmospheric pressure. In this case, the atmospheric pressure is led to the flap open/close device 84 through the pipe P3. Thus, the inside of the suction chamber of the flap open/close device 84 becomes or has an atmospheric pressure.

As described above, since the flap open/close device 84 is provided on the front upper surface portion 81c, that is inclined downward, of the duct main body 81, the flap open/close device 84 can be provided at a lower portion on the duct main body 81. Thus, a center of gravity of the front portion of the vehicle is lowered, and flexibility in design of aerodynamic characteristics of the front portion of the vehicle is improved.

Further, the above-mentioned configuration causes the surge tank 85 to be attached to or provided at the side surface portion 82b, and the solenoid valve 86 to be attached to or provided at the side surface portion 83b. In this manner, since neither the surge tank 85 nor the solenoid valve 86 is arranged on the duct main body 81, the center of gravity of the front portion of the vehicle is lowered. Further, the shape of the front portion of the vehicle above the duct main body 81 is not limited by the surge tank 85 and the solenoid valve 86. Further, since the surge tank 85 and the solenoid valve 86 are provided on respective sides of the duct main body 81, weight balance between the right and left portions of the front portion of the vehicle is maintained.

As shown in Figures 10 and 11, a temperature sensor 87 is provided on the side surface portion 82b of the duct main body 81 in addition to the surge tank 85. The temperature sensor 87 has a bar-shaped temperature detector, and detects temperature of air that is led to the engine 3 (an intake temperature). A through-hole used when the temperature detector of the temperature sensor 87 is inserted into the lower passage 8PB shown in Figure 9 is formed at the side surface portion 82b.

With the temperature detector of the temperature sensor 87 being inserted into the through-hole, the temperature sensor 87 is fixed or attached to the side surface portion 82b by a screw or other fixing means. In the passage forming member 82 of the present example, a screw receiver, which receives the screw that is used when the temperature sensor 87 is fixed or attached, is formed in the partition wall 82d. In this case, it is not necessary to form the screw receiver at a position spaced apart from the partition wall 82d inside of the passage forming member 82. Thus, a flow of air in the intake passage 8P is not blocked by the screw receiver.

For example, in the ECU of the motorcycle 100, a table showing a relation between the intake temperature and an air-fuel ratio can be stored in advance. The ECU controls an injector (not shown) based on the table stored in advance and the intake temperature detected by the temperature sensor 87. Thus, an air-fuel mixture is produced at an appropriate air-fuel ratio corresponding to the intake temperature.

As described above, since the temperature sensor 87 is provided at the side surface portion 82b of the duct main body 81, the temperature sensor 87 can detect the intake temperature without being affected by the heat generated from the engine 3. Further, the shape of the front portion of the vehicle above the duct main body 81 is not limited by the temperature sensor 87.

### Configuration of Stay and Duct and their Effects

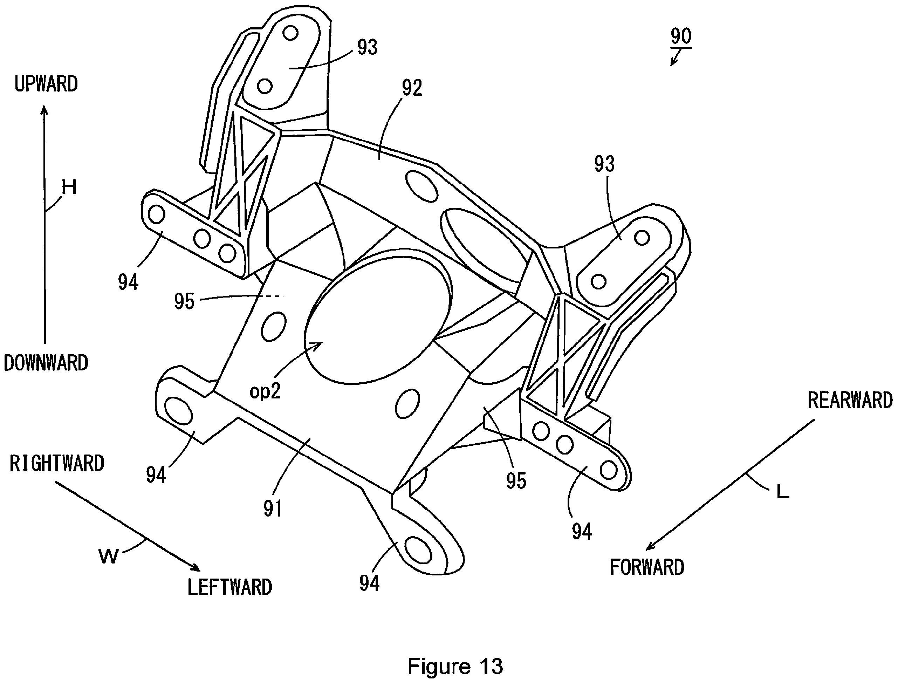

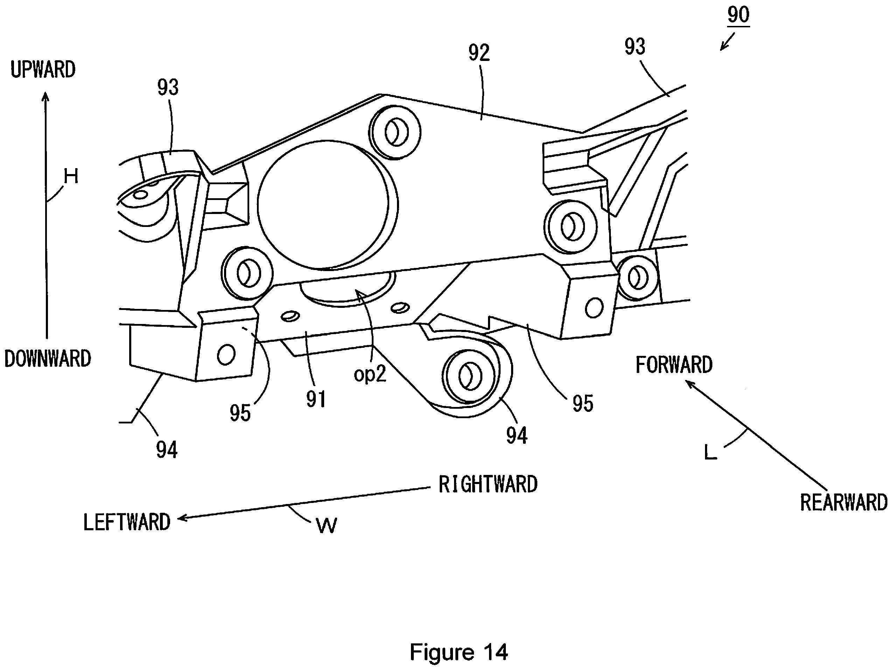

Figure 13 is an external perspective view of the stay 90 shown in Figure 3 as obliquely viewed rearward from above, and Figure 14 is a partial external perspective view of the stay 90 of Figure 3 as obliquely viewed forward from below. As shown in Figures 13 and 14, the stay 90 has a pair of side surface holding portions 95, namely left and right side surface holding portions 95, in addition to the above-mentioned duct attachment portion 91, the up-standing portion 92, the pair of mirror device fixing portions 93 and the plurality of lamp fixing portions 94.

The pair of side surface holding portions 95 is formed so as to be opposite to each other in the width direction W, and to extend downward from a right side portion and a left side portion of the duct attachment portion 91. An opening op2, which is larger than the flap open/close device 84 shown in Figure 10, is formed at a central portion of the duct attachment portion 91.

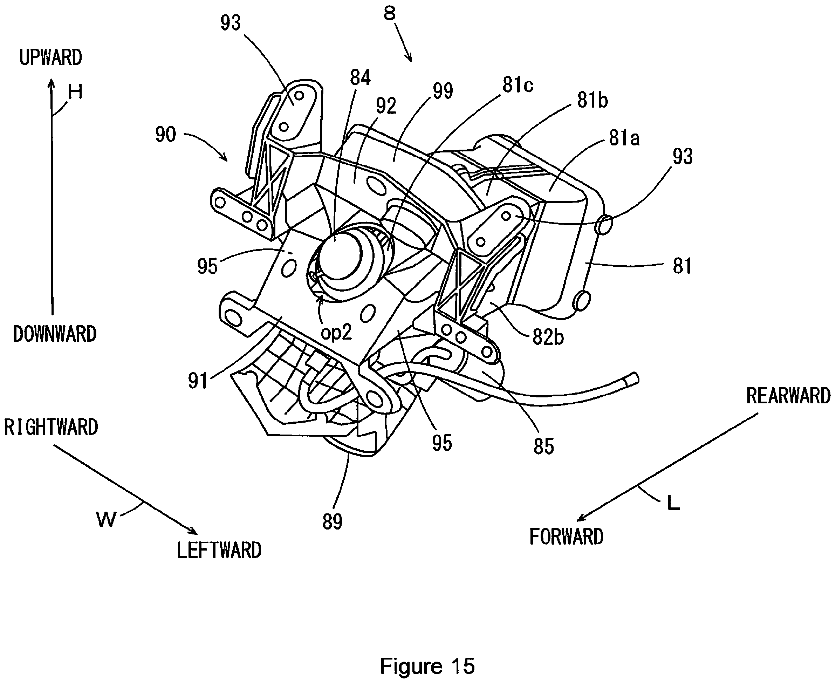

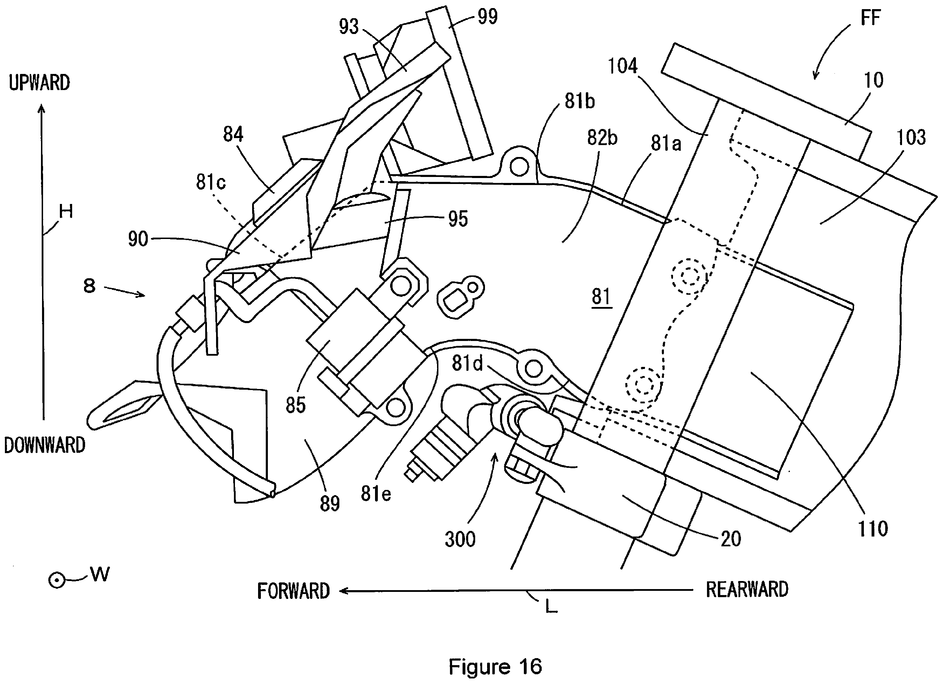

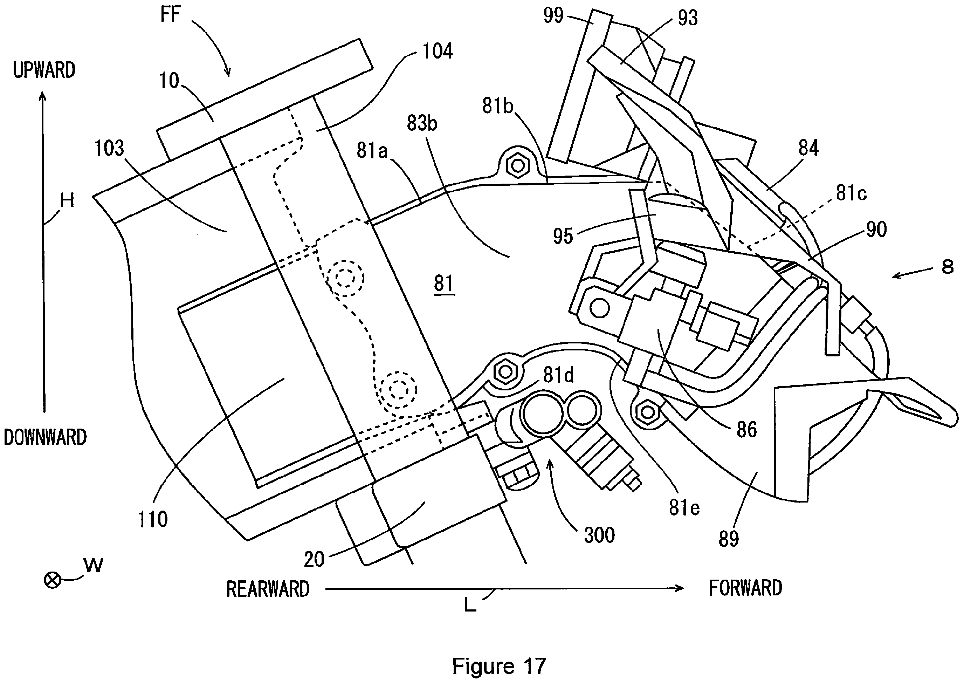

Figure 15 is an external perspective view showing the plurality of devices and members attached to the duct main body 81. Figure 16 is a side view of one side of the duct main body 81 shown in Figure 15 as viewed from a position further leftward than the vehicle, and Figure 17 is a side view of the other side of the duct main body 81 shown in Figure 15 as viewed from a position further rightward than the vehicle. In Figures 16 and 17, the front fork FF shown in Figure 1 is shown together with the duct main body 81 shown in Figure 15.

Firstly, the configuration of the front fork FF of the present example will be described. As shown in Figures 16 and 17, the front fork FF of the present example includes an upper bracket 10, an under bracket 20 and a pair of fork tubes 104, namely left and right fork tubes 104.

The upper bracket 10 is a metallic flat-plate shaped member, and is attached to the upper end of the head pipe 103 to be rotatable about or relative to the head pipe 103. The pair of handles 30 shown in Figures 1 and 2 is provided at the upper bracket 10. The under bracket 20 is attached to the lower end of the head pipe 103 to be rotatable about or relative to the head pipe 103.

As shown in Figures 16 and 17, the left and right fork tubes 104 are arranged to obliquely extend downward and forward and to be parallel to each other. The upper bracket 10 couples the upper ends of the left and right fork tubes 104 to each other. The under bracket 20 couples the left and right fork tubes 104 at a position further downward than the upper bracket 10. Thus, a rectangular space surrounded by the upper bracket 10, the under bracket 20 and the left and right fork tubes 104 is formed. The left and right fork tubes 104 are located at a position further outward in the width direction W and further forward in the front-and-rear direction L than the head pipe 103. The steering damper 300 is attached to the under bracket 20. The steering damper 300 is located in front of the under bracket 20. Details of the steering damper 300 will be described below.

The duct unit 8 extends forward from the head pipe 103 to pass through the rectangular space that is surrounded by the upper bracket 10, the under bracket 20 and the left and right fork tubes 104.

As shown in Figure 15, the duct attachment portion 91 of the stay 90 is located on the front upper surface portion 81c of the duct main body 81. The front upper surface portion 81c is inclined downward. Thus, the stay 90 can be provided at a lower position on the duct main body 81. Further, the flap open/close device 84 attached to the duct main body 81 is arranged in the opening op2 of the duct attachment portion 91. In this case, the flap open/close device 84 and the duct attachment portion 91 of the stay 90 do not overlap with each other on the duct main body 81. Thus, the center of gravity in the front portion of the vehicle is lowered. Further, flexibility in design of the aerodynamic characteristics of the front portion of the vehicle is improved.

Further, in the present example, as shown in Figure 16, the left side surface holding portion 95 of the stay 90 abuts against the side surface portion 82b of the left passage forming member 82. Further, as shown in Figure 17, the right side surface holding portion 95 of the stay 90 abuts against the side surface portion 83b of the right passage forming member 83. In this manner, as shown in Figure 15, the both side surface portions 82b, 83b of the duct main body 81 are sandwiched from the outside between the pair of side surface holding portions 95.

Thus, a coupled state of the pair of passage forming members 82, 83, in which the passage forming members 82, 83 are coupled to each other, is maintained. Therefore, generation of the gap between the pair of passage forming members 82, 83 is prevented by the weight of the surge tank 85 that is provided or attached to the left side surface portion 82b and the solenoid valve 86 that is provided or attached to the right side surface portion 83b.

Further, in the stay 90 of the present example, the left and right mirror devices 40 shown in Figure 1 are attached to or provided at the respective left and right mirror device fixing portions 93. The meter unit 99 is attached to or provided at the upstanding portion 92. In this manner, the stay 90 has a function of maintaining the pair of passage forming members 82, 83 in the coupled state, and a function of supporting the pair of mirror devices 40 and the meter unit 99. Thus, it is not necessary to individually or separately prepare or provide a member that is used to maintain the coupled state of the pair of passage forming members 82, 83, a member that is to support the pair of mirror devices 40 and a member that is used to support the meter unit 99. Therefore, an increase in the number of components is prevented or inhibited.

As shown in Figures 16 and 17, the duct unit 8 passes between the left and right fork tubes 104 and between the upper bracket 10 and the under bracket 20 forward, and extends to a position above the steering damper 300. Further, the duct unit 8 further extends forward from the position above the steering damper 300 to a position further forward and downward than the steering damper 300.

In the present example, the steering damper 300 is provided at the under bracket 20, which is closer to the front wheel 105 shown in Figure 1 than the upper bracket 10. The duct unit 8 is curved so as to not interfere with the steering damper 300. In this case, it is not necessary to provide the duct unit 8 so as to pass outside of the pair of fork tubes 104 in order to avoid interference of the duct unit 8 with the steering damper 300 while the steering damper 300 is provided at a position close to the front wheel 105. Therefore, a supercharging effect can be achieved without an increase in width of a vehicle front end. Further, moisture of rain water, mud water and the like is unlikely to flow into the engine 3.

Further, since the steering damper 300 is provided at a position lower than the upper bracket 10, the center of gravity of the front portion of the vehicle is lowered. Further, since the steering damper 300 is not attached to or provided at the upper bracket 10, design of the front portion of the vehicle as viewed from the rider is good or improved.

### Operation of Flap

Figure 18 is a longitudinal cross sectional view of a front portion of the motorcycle 100 taken along the line Q-Q of Figure 2. In Figure 18, the front fork FF and the steering damper 300 are not shown. As shown in Figure 18, the flap FL is rotatably or pivotably supported between the front upper surface portion 81c and the front partition wall BA2 in the upper passage 8PA inside of the duct main body 81 by the rotation shafts ss.

The coupling member 84d of the flap open/close device 84 is a metallic bar-shaped member, which obliquely extends downward from the opening op1 of the front upper surface portion 81c and is connected to the driving projection pj of the flap FL. In the flap open/close device 84, the pressure in the suction chamber (not shown) changes from a negative pressure to an atmospheric pressure, whereby the coupling member 84d is obliquely depressed downward. In this case, as indicated by the dotted arrow "a" in Figure 18, the flap FL is rotated in the one or first direction, and portions in the vicinity of the front end of the flap FL abut against the rotation blockers 82f, 83f shown in Figure 8. Thus, when the flap FL is substantially parallel to the front partition wall BA2, the rotation of the flap FL in the one or first direction is blocked. In this state, the upper passage 8PA is opened.

On the other hand, in the flap open/close device 84 of the present example, the pressure in the suction chamber (not shown) changes from an atmospheric pressure to a negative pressure, whereby the coupling member 84d is obliquely pulled upward. In this case, as indicated by the solid arrow "b" in Figure 18, the flap FL is rotated in an opposite or second direction, whereby the front end of the flap FL abuts against the front upper surface portion 81c, and the rear end of the flap FL abuts against the front end of the rear partition wall BA1. Thus, when the flap FL is inclined with respect or relative to the front partition wall BA2, the rotation of the flap FL in the opposite or second direction is blocked. In this state, the upper passage 8PA is closed.

For example, when a travelling speed of the motorcycle 100 or a rotational speed of the engine 3 exceeds a specific threshold value, the flap FL in the duct main body 81 can be rotated in the one or first direction, and the upper passage 8PA is opened. In this case, the air flowing into the intake passage 8P from the intake opening 72o of the vehicle front end is supplied to the engine 3 through the upper passage 8PA and the lower passage 8PB. Thus, a high supercharging effect can be achieved.

On the other hand, when the traveling speed of the motorcycle 100 or the rotational speed of the engine 3 is not more than or below the specific threshold value, the flap FL in the duct main body 81 can be rotated in the opposite or second direction, and the upper passage 8PA is closed. In this case, the air flowing into the intake passage 8P from the intake opening 72o of the vehicle front end is supplied to the engine 3 through the lower passage 8PB. Thus, the supercharging effect can be achieved, and noise that is transmitted or leaks from the engine 3 to the outside through the intake passage 8P is reduced.

In particular, in the duct main body 81 of the present example, the intake passage 8P is partitioned or separated into an upper section and a lower section by the rear partition wall BA1 and the front partition wall BA2. The rear partition wall BA1 obliquely extends upward and forward, and the front partition wall BA2 obliquely extends downward and forward. In this case, the passage through which the noise generated by the engine 3 passes has a curved portion, and the length of the passage is sufficiently ensured. Thus, an attenuation effect of noise that is transmitted or leaks from the engine 3 to the outside through the intake passage 8P is achieved.

Further, in the duct main body 81 of the present example, the upper passage 8PA of the duct main body 81 is designed to have a cross sectional area, which is larger than that of the lower passage 8PB. Thus, when the upper passage 8PA is closed by the flap FL, noise that is transmitted or leaks to the outside from the engine 3 through the intake passage 8P is sufficiently reduced.

### Shape of Flap

As indicated by the one-dot and dash line in Figure 18, an axis, which is parallel to the front partition wall BA2 and passes through the center of rotation of the flap FL, is defined by reference axis ra. With the upper passage 8PA being opened, the flap FL is formed or provided such that the front end of the flap FL is located at a position further upward than the reference axis ra and the rear end of the flap FL is located at a position further downward than the reference axis ra.

In this case, the flap FL is continuously curved in a wavy or undulating shape in a cross section parallel to the front-and-rear direction L and the top-and-bottom direction H (a vertical cross section). Thus, when the upper passage 8PA is opened, the air flowing into the upper passage 8PA smoothly flows from the front end to the rear end of the flap FL along the lower surface of the flap FL. Thus, a flow loss caused by the curving of the duct unit 8 is reduced or minimized. This effect was confirmed by the below-mentioned simulation.

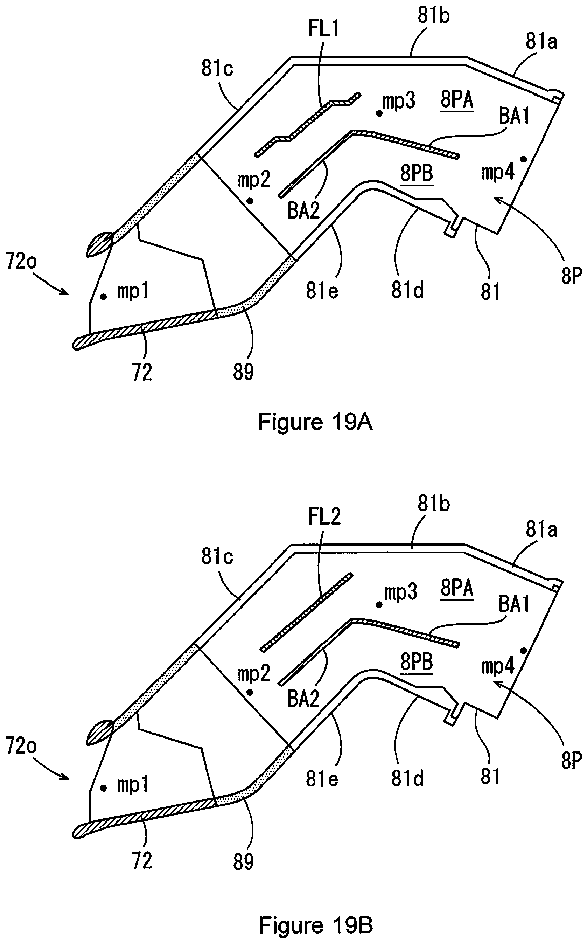

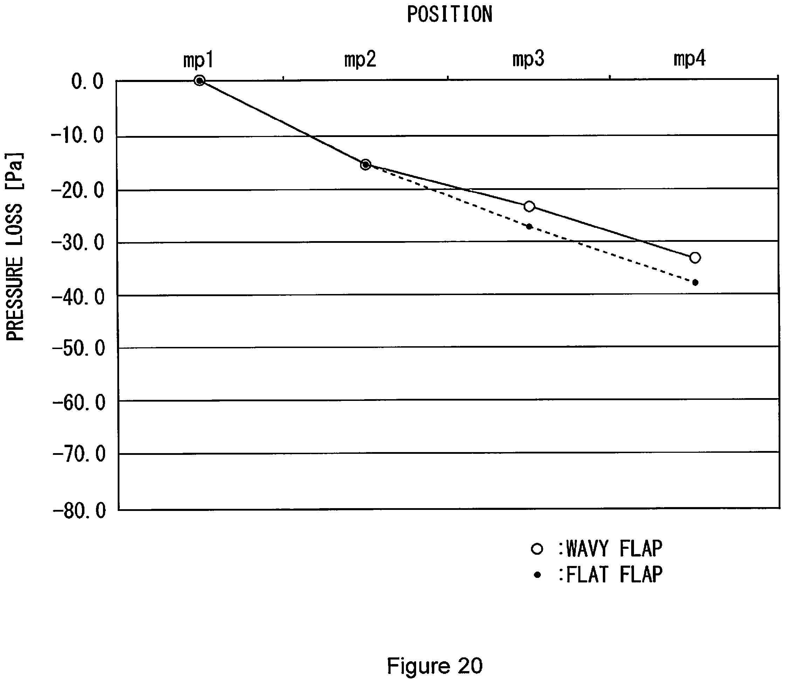

Figures 19A and 19B are diagrams, which show a simulation of the relationship between a shape of the flap FL and a loss of air flow, and Figure 20 is a graph that shows the result of the simulation of the relationship between the shape of the flap FL and the loss of air flow.

The inventors of the present application used a simulation to calculate the loss of air flow that is generated at each position of a plurality of positions mp1, mp2, mp3, mp4, when air flows from the intake opening 72o into the duct main body 81, which is provided with a flap FL1 having a wavy or undulating shape (hereinafter referred to as a wavy flap), as shown in Figure 19A. Further, the inventors of the present application used a simulation to calculate the loss of air flow that is generated at each position of the plurality of positions mp1, mp2, mp3, mp4, when air flows from the intake opening 72o into the duct main body 81, which is provided with a flap FL2 having a flat-plate or planar shape (hereinafter referred to as a flat flap), as shown in Figure 19B.

The above-mentioned positions mp1, mp2, mp3, mp4 are set or provided at respective positions in the vicinity of the intake opening 72o, in the vicinity of the front end of the intake passage 8P, at the central portion of the intake passage 8P and in the vicinity of the rear end of the intake passage 8P, in the duct unit 8.

In the graph shown in Figure 20, the ordinate indicates the pressure loss, and the abscissa indicates the position. Further, white or open circles indicate the simulation results, which are obtained or acquired when the wavy or undulating flap FL1 is used, and black or solid dots indicate the simulation results, which are obtained or acquired when the flat or planar flap FL2 is used.

As shown in Figure 20, at positions mp1, mp2, no difference is generated between the pressure loss acquired or obtained when the wavy or undulating flap FL1 is used and the pressure loss acquired or obtained when the flat flap FL2 is used. On the other hand, at positions mp3, mp4, the pressure loss generated when the wavy flap FL1 is used is smaller than the pressure loss generated when the flat flap FL2 is used.

From these simulation results, it became apparent that the flow loss caused by the wavy flap FL1 due to the curving or shape of the duct unit 8, is reduced or minimized.

The flap FL does not necessarily have to be formed in a wavy or undulating shape. The flap FL may be formed in a flat-plate or planar shape depending on a position at which the flap FL is provided and a shape of the inside of the duct main body 81.

### Configuration of Steering Damper

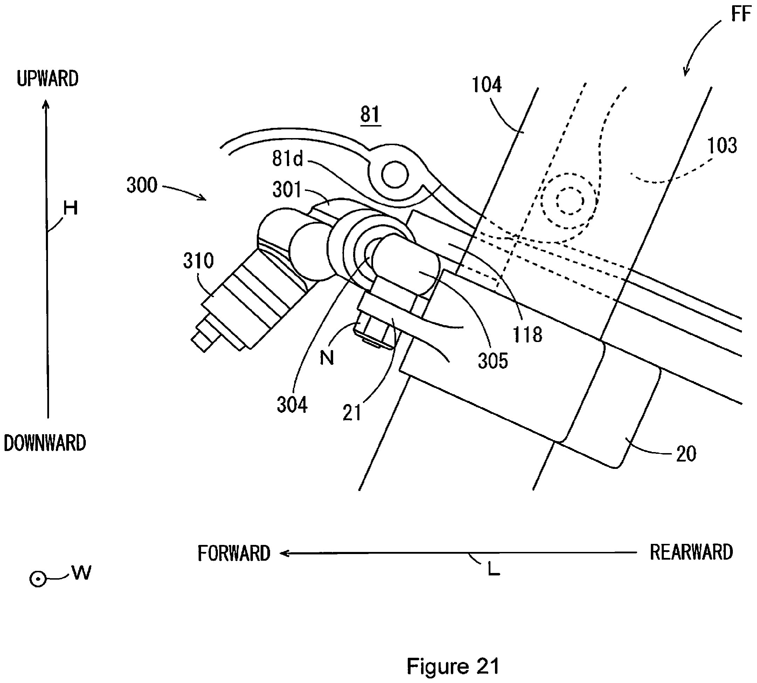

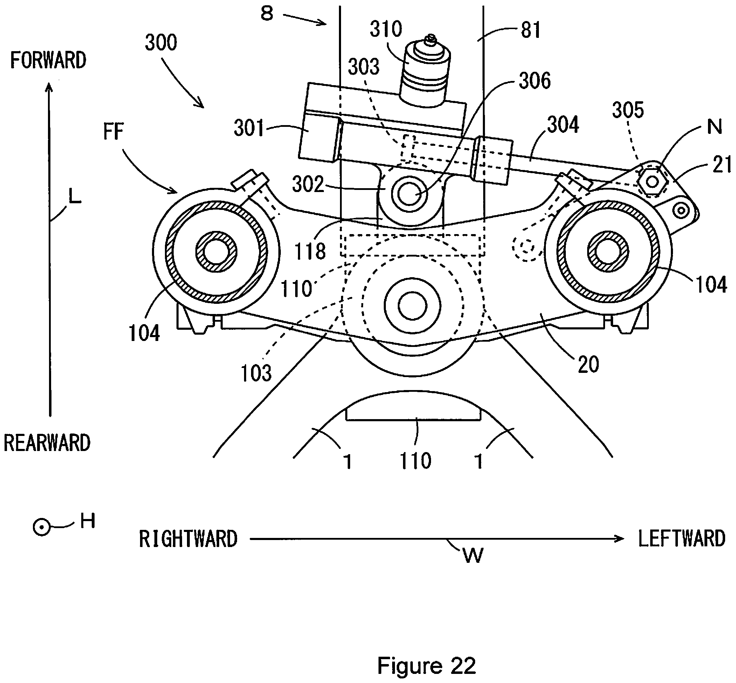

Figure 21 is a side view of one side of the steering damper 300 as viewed from a position further leftward than the vehicle, and Figure 22 is a bottom view of the steering damper 300 shown in Figure 21 as viewed from below. As shown in Figure 22, the left and right fork tubes 104 are coupled to each other by the under bracket 20 in the front fork FF.

A rod attachment portion 21 is formed at the left end of the under bracket 20 to project to a position further forward than the front fork FF. A damper attachment portion 118 is provided to project to a position further forward than the front end of the under bracket 20 in front of the head pipe 103. The rod attachment portion 21 and the damper attachment portion 118 have one or more respective through-holes, which open upward and downward.

The steering damper 300 includes a cylinder 301, a piston 303, a piston rod 304, a ball joint 305, a coupling shaft 306 and a solenoid valve 310. A cylinder supporter 302 is formed at the outer peripheral surface of the cylinder 301 to project outward from a central portion of the cylinder 301 in an axis direction. The cylinder supporter 302 has a throughhole that opens upward and downward.

The cylinder supporter 302 of the cylinder 301 is arranged below the damper attachment portion 118 to overlap with the damper attachment portion 118, and the coupling shaft 306 is inserted into the through-holes of the damper attachment portion 118 and the cylinder supporter 302. Thus, the cylinder 301 is rotatably or pivotably supported by or coupled to the coupling shaft 306.

The piston 303 is movably provided in the cylinder 301. Part of the piston rod 304, which supports the piston 303, projects to the outside of the cylinder 301 from the inside of the cylinder 301. The ball joint 305 is attached to or provided at the end of the piston rod 304 located outside of the cylinder 301.

With the cylinder 301 being attached to the damper attachment portion 118, a ball stud of the ball joint 305 is inserted from above into the throughhole of the rod attachment portion 21, and is fixed or attached by a nut N or other fixing means, as shown in Figure 21. Thus, the end of the piston rod 304, which projects to the outside of the cylinder 301, is rotatably or pivotably supported by or coupled to an axis of the ball stud of the ball joint 305.

When the front fork FF is rotated about or relative to the head pipe 103 by operation of the handle 30 shown in Figure 1, the distance between the rod attachment portion 21 and the damper attachment portion 118 of Figure 22 changes. In this case, the piston 303 is moved into the cylinder 301, so that the steering damper 300 can extend and contract. At this time, a vibration attenuation force is exerted on the front fork FF.

As described above, the steering damper 300 of the present example includes the solenoid valve 310. The solenoid valve 310 is provided to obliquely extend downward and forward from the front end of the cylinder 301. The solenoid valve 310 is used to adjust the vibration attenuation force of the steering damper 300.

In the steering damper 300 of the present example, the cylinder supporter 302 is provided at the central portion of the cylinder 301 in an axial direction of the cylinder 301, and the ball joint 305 is provided at the end of the piston rod 304 that projects from the cylinder 301. The cylinder supporter 302 and the ball joint 305 are attached to the damper attachment portion 118 and the rod attachment portion 21, respectively. In this manner, the steering damper 300 is arranged to extend in the width direction W. Thus, a space below a curved portion of the duct unit 8 can be effectively utilized.

### Effects

In the front fork unit FU according to the present embodiment, the steering damper 300 is provided at the under bracket 20 of the front fork FF. Thus, the vibrations generated at the steering system during travel of the motorcycle 100 is attenuated by the steering damper 300. In this case, the force, which attenuates the vibration of the steering system, is exerted on the left and right fork tubes 104 at a position closer to the front wheel 105 than the upper bracket 10. Therefore, generation of torsion at the front fork FF can be inhibited or prevented.

Further, the duct unit 8 is curved to pass between the left and right fork tubes 104 forward and to not interfere with the steering damper 300. Therefore, it is not necessary to provide the duct unit 8 so as to pass outside of the left and right fork tubes 104 in order to avoid the interference of the duct unit 8 with the steering damper 300 while the steering damper 300 is provided at the under bracket 20. Thus, a supercharging effect can be achieved without an increase in width of the vehicle front end. Further, moisture of rain water, mud water and the like is unlikely to flow into the engine.

Further, since the steering damper 300 is provided at a position further lower than the upper bracket 10, the center of gravity of the front portion of the vehicle is lowered. Further, since the steering damper 300 is not attached to the upper bracket 10, design of the front portion of the vehicle as viewed from the rider is good or improved.

### Other Embodiments

While the duct main body 81 of the duct unit 8 is formed by the coupling of the passage forming members 82, 83 to each other in the above-mentioned embodiment, the invention is not limited to this. The duct main body 81 may be fabricated to be integral instead of by coupling the passage forming members 82, 83 to each other.

Further, in this case, the flap FL does not have to be provided inside of the duct main body 81. Further, the rear partition wall BA1 and the front partition wall BA2 do not have to be formed inside of the duct main body 81. Thus, the configuration of the duct unit 8 is simplified, and the fabrication of the duct unit 8 is facilitated.

While the rear partition wall BA1 and the front partition wall BA2 are formed inside of the duct main body 81 of the duct unit 8 in the above-mentioned embodiment, the invention is not limited to this. The rear partition wall BA1 and the front partition wall BA2 do not have to be formed inside of the duct main body 81. Thus, the configuration of the duct unit 8 is simplified, and the fabrication of the duct unit 8 is facilitated.

While the body cover 7 includes the right and left side cowls 73 in the above-mentioned embodiment, the invention is not limited to this. The body cover 7 does not have to include the right and left side cowls 73. In this case, the number of components of the motorcycle 100 can be reduced.

While the handles 30, which are spaced apart from each other, are attached to the front fork FF in the above-mentioned embodiment, the invention is not limited to the above-mentioned example. The handles 30 may be integrally formed from one tubular member.

While the above-mentioned embodiment is an example in which the present invention is applied to the motorcycle, the invention is not limited to this. The present invention may be applied to another saddle-ride or straddle-type vehicle, e.g. saddle-straddling type motor vehicle such as a motor tricycle, moped, scooter, snow-mobile an All Terrain Vehicle (ATV) or the like.

### Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the head pipe 103 is an example of a head pipe, the body frame 1X is an example of a body frame, the front fork unit FU is an example of a front fork unit, the pair of handles 30 is an example of a handle and the engine 3 is an example of an engine.

Further, the intake passage 8P, the upper passage 8PA and the lower passage 8PB are examples of an intake passage, the duct unit 8 is an example of an air guide unit, the upper bracket 10 is an example of a first coupling member, the under bracket 20 is an example of a second coupling member and the pair of right and left fork tubes 104 is an example of a pair of right and left fork tubes.

Further, the steering damper 300 is an example of a steering damper, the motorcycle 100 is an example of a saddle-ride or straddle-type vehicle, such as a saddle-straddling type motor vehicle, the upper passage 8PA is an example of a first passage, the lower passage 8PB is an example of a second passage, the rear partition wall BA1 and the front partition wall BA2 are examples of a passage partition and the flap FL is an example of a current plate.

Further, the rear partition wall BA1 is an example of a first inclined portion, the front partition wall BA2 is an example of a second inclined portion, the rear upper surface portion 81a is an example of a first upper surface portion, the front upper surface portion 81c is an example of a second upper surface portion, the rear bottom surface portion 81d is an example of a first bottom surface portion and the front bottom surface portion 81e is an example of a second bottom surface portion. Further, the stay 90 is an example of an attachment member.

Flap open/close device 84, surge tank 85, solenoid valve 86, check valve CV, pipe PO, pipe P1, pipe P2 and/or pipe P3 are examples of the plurality of devices.

Further, the reference axis ra is an example of a reference axis, the front end of the flap FL is an example of a front end, the rear end of the flap FL is an example of a rear end, the damper attachment portion 118 is an example of an attachment portion, the cylinder supporter 302 is an example of a first portion and the ball joint 305 is an example of a second portion.

As each of constituent elements recited in the claims, various other elements having configurations or functions described in the claims can be also used.

The present invention can be effectively utilized for a vehicle and the like that can acquire a supercharging effect by ram pressure.

It will be appreciated that the embodiment of the invention hereinbefore described is given by way of example only, and is not meant to be limiting of the scope of the invention.

It will be appreciated that the term straddle-type vehicle or motor vehicle used herein, and as used in the art, is meant to include the following terms also used in the art:
saddled vehicle, saddle-ride type vehicle or motor vehicle, saddle-straddling type vehicle or motor vehicle, and includes:
   motorcycles and motorbikes as well as motor tricycles and All-Terrain Vehicles (ATVs), scooters, mopeds and snow mobiles.

## Claims

1. A saddle-ride or straddle-type vehicle (100), such as a saddle-straddling type motor vehicle (100), comprising:
a head pipe (103);
a body frame (1X) that extends rearward from the head pipe (103);
a front fork unit (FU) rotatably provided at the head pipe (103);
a handle (30) provided at the front fork unit (FU);
an engine (3) supported by the body frame (1X); and
an air guide unit (8) that forms an intake passage (8P) that leads air to the engine (3), wherein
the front fork unit (FU) comprises
an upper bracket (10) provided at an upper end of the head pipe (103) to be rotatable about the head pipe (103),
an under bracket (20) provided at a lower end of the head pipe (103) to be rotatable about the head pipe (103);
left and right fork tubes (104) supported by the respective upper and under brackets (10, 20) at positions further outward in a vehicle width direction and further forward in a vehicle front-and-rear direction than the head pipe (103), and
a steering damper (300) provided at the under bracket (20), wherein
the steering damper (300) is located at a position further forward than the under bracket (20) in the vehicle front-and-rear direction; and wherein
the air guide unit (8) is formed to pass forward between the left and right fork tubes (104) and forward between the upper and under brackets (10, 20), obliquely extend upward and forward to a position above the steering damper (300) and further obliquely extend downward and forward from the position above the steering damper (300) to a position further forward and downward than the steering damper (300), **characterised in that**
the air guide unit (8) further comprises:
a rear bottom surface portion (81d) that obliquely extends upward and forward from a position between the left and right fork tubes (104) and between the upper and under brackets (10, 20);
a front bottom surface (81e) portion that obliquely extends downward and forward from a position in front of the rear bottom surface portion (81d);
a passage partition (BA1, BA2) that partitions or separates at least part of the intake passage (8P) into upper and lower passages (8PA,8PB), which are arranged in a vehicle top-and-bottom direction; and
a flap (FL) provided at or in at least the upper passage of the upper and lower passages (8PA, 8PB) to be openable and closable;
wherein the passage partition (BA1, BA2) comprises a first inclined portion (BA1) that obliquely extends upward and forward, and a second inclined portion (BA2) that obliquely extends downward and forward from a front end of the first inclined portion (BA1); and
wherein the flap (FL) is formed to be continuously curved in a wavy shape in a cross section parallel to the vehicle front-and-rear direction and the vehicle top-and-bottom direction, and provided to be switchable or operable between an open state, in which the at least upper passage (8PA) is opened and a close state, in which the at least upper passage (8PA) is closed by the flap (FL), the flap (FL) being rotated or rotatable about a rotation shaft (ss) that extends in the vehicle width direction in the upper passage.

2. The vehicle (100) according to claim 1, wherein
the air guide unit (8) comprises
a rear upper surface portion (81a) that obliquely extends upward and forward from a position between the left and right fork tubes (104) and between the upper and under brackets (10, 20), and
a front upper surface portion (81c) that obliquely extends downward and forward from a position in front of the rear upper surface portion (81a).

3. The vehicle (100) according to claim 2, wherein
the flap (FL) is arranged between the second inclined portion (BA2) of the passage partition (BA1, BA2), and the front upper surface portion (81c) or the front bottom surface portion (81e) of the air guide unit (8), and
a reference axis (ra) that is parallel to the second inclined portion (BA2) of the passage partition and intersects the rotation shaft (ss) in the cross-section parallel to the vehicle front-and-rear direction and the vehicle top-and-bottom direction is defined.

4. The vehicle (100) according to claim 3, wherein
the flap (FL) has a front end located at a position further upward than the reference axis (ra) in the open state, and a rear end located at a position further downward than the reference axis (ra) in the open state.

5. The vehicle (100) according to any one of claims 1 to 5, wherein
the upper passage (8PA) of the upper and lower passages (8PA, 8PB) has a cross sectional area larger than that of the lower passage (8PB).

6. The vehicle (100) according to any one of claims 1 to 5, further comprising an attachment portion (118) provided to extend forward from the head pipe (103), and
the steering damper (300) has a first portion (302) connected to the attachment portion (118) and a second portion (305) connected to a second coupling portion (21).

7. The vehicle according to any one of claims 2, 3 and 4, wherein the vehicle comprises:
an attachment member (90) integrally attached to at least part of respective side surfaces (82b, 83b) of the air guide unit (8), and the front upper surface portion (81c) of the air guide unit (8), in the vehicle width direction.

8. The vehicle according to claim 7, wherein the vehicle comprises left and right rear-view mirrors (40), which are attached to the attachment member (90).

9. The vehicle according to any one of claims 1 to 5, wherein the vehicle comprises one or more of devices (84, 85, 86, cv, P0 to P3) for driving the flap (FL), the one or more devices being attached to the air guide unit (8).

## Patentansprüche

1. Reitsitz- oder Spreizsitz-Fahrzeug (100), wie beispielsweise ein Sattelspreizsitz-Kraftfahrzeug (100), das Folgendes umfasst:
ein Kopfrohr (103),
einen Aufbaurahmen (1X), der sich von dem Kopfrohr (103) aus nach hinten erstreckt,
eine Vordergabeleinheit (FU), die drehbar an dem Kopfrohr (103) bereitgestellt wird,
einen Handgriff (30), der an der Vordergabeleinheit (FU) bereitgestellt wird,
einen Motor (3), der durch den Aufbaurahmen (1X) getragen wird, und
eine Luftleiteinheit (8), die einen Ansaugdurchgang (8P) bildet, der Luft zu dem Motor (3) leitet, wobei
die Vordergabeleinheit (FU) Folgendes umfasst:
eine obere Brücke (10), die an einem oberen Ende des Kopfrohrs (103) so bereitgestellt wird, dass sie um das Kopfrohr (103) drehbar ist,
eine untere Brücke (20), die an einem unteren Ende des Kopfrohrs (103) so bereitgestellt wird, dass sie um das Kopfrohr (103) drehbar ist,
ein linkes und ein rechtes Gabelrohr (104), die durch die jeweilige obere beziehungsweise untere Brücke (10, 20) an Positionen, weiter nach außen in einer Fahrzeugbreitenrichtung und weiter nach vorn in einer Fahrzeuglängsrichtung als das Kopfrohr (103), getragen werden, und
einen Lenkungsdämpfer (300), der an der unteren Brücke (20) bereitgestellt wird, wobei
der Lenkungsdämpfer (300) an einer Position, weiter nach vorn als die untere Brücke (20) in der Fahrzeuglängsrichtung, angeordnet ist und wobei
die Luftleiteinheit (8) so geformt ist, dass sie nach vorn zwischen dem linken und dem rechten Gabelrohr (104) und nach vorn zwischen der oberen und der unteren Brücke (10, 20) hindurchgeht, sich schräg nach oben und nach vorn bis zu einer Position, oberhalb des Lenkungsdämpfers (300), erstreckt und sich ferner schräg nach unten und nach vorn von der Position, oberhalb des Lenkungsdämpfers (300), aus bis zu einer Position, weiter nach vorn und nach unten als der Lenkungsdämpfer (300), erstreckt, **dadurch gekennzeichnet, dass**
die Luftleiteinheit (8) ferner Folgendes umfasst:
einen hinteren unteren Oberflächenabschnitt (81d), der sich schräg nach oben und nach vorn von einer Position, zwischen dem linken und dem rechten Gabelrohr (104) und zwischen der oberen und der unteren Brücke (10, 20), aus erstreckt,
einen vorderen unteren Oberflächenabschnitt (81e), der sich schräg nach unten und nach vorn von einer Position, vor dem hinteren unteren Oberflächenabschnitt (81d), aus erstreckt,
eine Durchgangsteilung (BA1, BA2), die wenigstens einen Teil des Ansaugdurchgangs (8P) in einen oberen und einen unteren Durchgang (8PA, 8PB) teilt oder trennt, die in einer Fahrzeughöhenrichtung angeordnet sind, und
eine Klappe (FL), die an oder in wenigstens dem oberen Durchgang von dem oberen und dem unteren Durchgang (8PA, 8PB) so angeordnet ist, dass sie zu öffnen und zu schließen ist,
wobei die Durchgangsteilung (BA1, BA2) einen ersten geneigten Abschnitt (BA1), der sich schräg nach oben und nach vorn erstreckt, und einen zweiten geneigten Abschnitt (BA2), der sich schräg nach unten und nach vorn von einem vorderen Ende des ersten geneigten Abschnitts (BA1) aus erstreckt, umfasst, und
wobei die Klappe (FL) so geformt ist, dass sie in einem Querschnitt, parallel zu der Fahrzeuglängsrichtung und der Fahrzeughöhenrichtung, durchgehend auf eine wellige Weise gekrümmt ist, und so bereitgestellt wird, dass sie zu schalten oder zu betätigen ist zwischen einem offenen Zustand, in dem wenigstens der obere Durchgang (8PA) geöffnet ist, und einem geschlossenen Zustand, in dem wenigstens der obere Durchgang (8PA) durch die Klappe (FL) geschlossen ist, wobei die Klappe (FL) um eine Drehachse (SS) gedreht wird oder drehbar ist, die sich in der Fahrzeugbreitenrichtung in dem oberen Durchgang erstreckt.

2. Fahrzeug (100) nach Anspruch 1, wobei
die Luftleiteinheit (8) Folgendes umfasst:
einen hinteren oberen Oberflächenabschnitt (81a), der sich schräg nach oben und nach vorn von einer Position, zwischen dem linken und dem rechten Gabelrohr (104) und zwischen der oberen und der unteren Brücke (10, 20), aus erstreckt,
einen vorderen oberen Oberflächenabschnitt (81c), der sich schräg nach unten und nach vorn von einer Position, vor dem hinteren oberen Oberflächenabschnitt (81a), aus erstreckt.

3. Fahrzeug (100) nach Anspruch 2, wobei
die Klappe (FL) zwischen dem zweiten geneigten Abschnitt (BA2) der Durchgangsteilung (BA1, BA2) und dem vorderen oberen Oberflächenabschnitt (81c) oder dem vorderen unteren Oberflächenabschnitt (81e) der Luftleiteinheit (8) angeordnet ist und
eine Bezugsachse (ra), die parallel zu dem zweiten geneigten Abschnitt (BA2) der Durchgangsteilung ist und die Drehachse (ss) in dem Querschnitt, parallel zu der Fahrzeuglängsrichtung und der Fahrzeughöhenrichtung, schneidet, definiert wird.

4. Fahrzeug (100) nach Anspruch 3, wobei
die Klappe (FL) ein vorderes Ende, das in dem offenen Zustand in einer Position, weiter nach oben als die Bezugsachse (ra), angeordnet ist, und ein hinteres Ende, das in dem offenen Zustand in einer Position, weiter nach unten als die Bezugsachse (ra), angeordnet ist, hat.

5. Fahrzeug (100) nach einem der Ansprüche 1 bis 4, wobei
der obere Durchgang (8PA) von dem oberen und dem unteren Durchgang (8PA, 8PB) eine Querschnittsfläche hat, die größer ist als diejenige des unteren Durchgangs (8PB).

6. Fahrzeug (100) nach einem der Ansprüche 1 bis 5, das ferner einen Befestigungsabschnitt (118) umfasst, der so bereitgestellt wird, dass er sich von dem Kopfrohr (103) aus nach vorn erstreckt, und wobei
der Lenkungsdämpfer (300) einen ersten Abschnitt (302), der mit dem Befestigungsabschnitt (118) verbunden ist, und einen zweiten Abschnitt (305), der mit einem zweiten Kopplungsabschnitt (219) verbunden ist, hat.

7. Fahrzeug nach einem der Ansprüche 2, 3 und 4, wobei das Fahrzeug Folgendes umfasst:
ein Befestigungselement (90), das integral an wenigstens einem Teil jeweiliger Seitenflächen (2b, 83b) der Luftleiteinheit (8) und dem vorderen oberen Oberflächenabschnitt (81c) der Luftleiteinheit (8), in der Fahrzeugbreitenrichtung, befestigt ist.

8. Fahrzeug nach Anspruch 7, wobei das Fahrzeug einen linken und einen rechten Rückspiegel (40) umfasst, die an dem Befestigungselement (90) befestigt sind.

9. Fahrzeug nach einem der Ansprüche 1 bis 5, wobei das Fahrzeug eine oder mehrere Einrichtungen (84, 85, 86, cv, P0 bis P3) zum Antreiben der Klappe (FL) umfasst, wobei die eine oder die mehreren Einrichtungen an der Luftleiteinheit (8) befestigt sind.

## Revendications

1. Véhicule à selle ou de type monté à califourchon (100) tel qu'un véhicule à moteur de type à selle monté à califourchon (10) comprenant :
un tube de tête (103),
un corps de caisse (1X) qui s'étend à l'arrière du tube de tête (103),
une unité de fourche avant (FU) agencée de façon rotative sur le tube de tête (103),
une poignée (30) agencée au niveau de l'unité de fourche avant (FU),
un moteur (3) supporté par le corps de caisse (1X), et
une unité de guidage d'air (8) qui forme un passage d'admission (8P) qui conduit l'air jusqu'au moteur (3), dans lequel
l'unité de fourche avant (FU) comprend :
un support supérieur (10) agencé à une extrémité supérieure du tube de tête (103) de façon à pouvoir tourner autour du tube de tête (103),
un support inférieur (20) agencé à une extrémité inférieure du tube de tête (103) de façon à pouvoir tourner autour du tube de tête (103),
des tubes de fourche gauche et droite (104) supportés par les supports respectifs supérieur et inférieur (10, 20) à des positions plus vers l'extérieur dans le sens de la largeur du véhicule et plus vers l'avant dans le sens d'avant en arrière du véhicule que le tube de tête (103), et
un amortisseur de direction (300) agencé au niveau du support inférieur (20), dans lequel
l'amortisseur de direction (300) est situé à une position plus en avant que le support inférieur (20) dans le sens d'avant en arrière du véhicule, et dans lequel
l'unité de guidage d'air (8) est formée de façon à passer à l'avant entre les tubes de fourche gauche et droite (104) et à l'avant entre les supports supérieur et inférieur (10, 20), à s'étendre obliquement vers le haut et vers l'avant jusqu'à une position au-dessus de l'amortisseur de direction (300) et à s'étendre plus obliquement vers le bas et vers l'avant depuis la position au-dessus de l'amortisseur de direction (300) jusqu'à une position plus en avant et vers le bas que l'amortisseur de direction (300),
**caractérisé en ce que** l'unité de guidage d'air (8) comprend en outre:
une partie de surface inférieure arrière (81d) qui se projette obliquement vers le haut et vers l'avant depuis une position entre les tubes de fourche gauche et droite (104) et entre les supports supérieur et inférieur (10, 20),
une partie de surface inférieure avant (81e) qui se projette obliquement vers le bas et vers l'avant depuis une position à l'avant de la partie de surface inférieure arrière (81d),
une cloison de parcours (BA1, BA2) qui divise ou sépare au moins une partie du passage d'admission (8P) en des passages supérieur et inférieur (8PA, 8PB) qui sont disposés dans le sens de haut en bas du véhicule, et
un volet (FL) agencé sur ou dans au moins le passage supérieur des passages supérieur et inférieur (8PA, 8PB) de façon à pouvoir être ouvert et fermé,
dans lequel la cloison de parcours (BA1, BA2) comprend une première partie inclinée (BA1) qui se projette obliquement vers le haut et vers l'avant et une seconde partie inclinée (BA2) qui se projette obliquement vers le bas et vers l'avant à partir d'une extrémité avant de la première partie inclinée (BA1), et
dans lequel le volet (FL) est formé de façon à être galbé en continu en une forme ondulée dans une coupe transversale parallèle au sens d'avant en arrière du véhicule et au sens de bas en haut du véhicule, et est agencé de façon à pouvoir être commuté ou actionné entre un état ouvert, dans lequel le au moins un passage supérieur (8PA) est ouvert et un état fermé, dans lequel le au moins un passage supérieur (8PA) est fermé par le volet (FL), le volet (FL) étant tourné ou pouvant tourner autour d'un axe de rotation (ss) qui s'étend dans le sens de la largeur du véhicule dans le passage supérieur.

2. Véhicule (100) selon la revendication 1, dans lequel
l'unité de guidage d'air (8) comprend
une partie de surface supérieure arrière (81a) qui se projette obliquement vers le haut et vers l'avant depuis une position entre les tubes de fourche gauche et droite (104) et entre les supports supérieur et inférieur (10, 20), et
une partie de surface supérieure avant (81c) qui se projette obliquement vers le bas et vers l'avant depuis une position à l'avant de la partie de surface supérieure arrière (81a).

3. Véhicule (100) selon la revendication 2, dans lequel
le volet (FL) est disposé entre la seconde partie inclinée (BA2) de la cloison de parcours (BA1, BA2) et la partie de surface supérieure avant (81c) ou la partie de surface inférieure avant (81e) de l'unité de guidage d'air (8), et
un axe de référence (ra) qui est parallèle à la seconde partie inclinée (BA2) de la cloison de parcours et qui croise l'axe de rotation (ss) dans la coupe transversale parallèle à la direction d'avant en arrière du véhicule et à la direction de bas en haut du véhicule est défini.

4. Véhicule (100) selon la revendication 3, dans lequel
le volet (FL) possède une extrémité avant située à une position davantage vers le haut que l'axe de référence (ra) à l'état ouvert, et une extrémité arrière située à une position davantage vers le bas que l'axe de référence (ra) à l'état ouvert.

5. Véhicule (100) selon l'une quelconque des revendications 1 à 4, dans lequel
le passage supérieur (8PA) des passages supérieur et inférieur (8PA, 8PB) a une surface de section transversale plus grande que celle du passage inférieur (8PB).

6. Véhicule (100) selon l'une quelconque des revendications 1 à 5, comprenant en outre une partie de fixation (118) agencée de façon à se projeter vers l'avant depuis le tube de tête (103), et dans lequel
l'amortisseur de direction (300) comporte une première partie (302) raccordée à la partie de fixation (118) et une seconde partie (305) raccordée à une seconde partie de raccordement (21).

7. Véhicule (100) selon l'une quelconque des revendications 2, 3 et 4, dans lequel le véhicule comprend :
un élément de fixation (90) fixé de façon solidaire à au moins une partie des surfaces latérales respectives (82b, 83b) de l'unité de guidage d'air (8), et à la partie de surface supérieure avant (81c) de l'unité de guidage d'air (8), dans le sens de la largeur du véhicule.

8. Véhicule selon la revendication 7, dans lequel le véhicule comprend des rétroviseurs gauche et droite (40) qui sont fixés à l'élément de fixation (90).

9. Véhicule selon l'une des revendications 1 à 5, dans lequel le véhicule comprend un ou plusieurs dispositifs (84, 85, 86, cv, P0 à P3) pour actionner le volet (FL), le un ou plusieurs dispositifs étant fixé(s) à l'unité de guidage d'air (8).
